# EUROPEAN PATENT SPECIFICATION

(11) **EP 2 203 520 B1**
(45) Date of publication and mention of the grant of the patent: **14.11.2012**
(21) Application number: 08807829.0
(22) Date of filing: 26.09.2008
(51) Int. Cl.: C08L 69/00, C08K 3/34

(54) **POLYCARBONATE COMPOSITION HAVING IMPROVED IMPACT, FLAMMABILITY AND SURFACE APPEARANCE, METHOD OF MAKING, AND ARTICLES PREPARED THEREFROM**
POLYCARBONATZUSAMMENSETZUNG MIT VERBESSERTER SCHLAGZÄHIGKEIT, VERBESSERTER ENTFLAMMBARKEIT UND VERBESSERTEM OBERFLÄCHENAUSSEHEN, HERSTELLUNGSVERFAHREN DAFÜR UND DARAUS HERGESTELLTE GEGENSTÄNDE
COMPOSITION DE POLYCARBONATE PRÉSENTANT UNE AMÉLIORATION DE L'IMPACT, DE LA FLAMMABILITÉ ET DE L'APPARENCE DE LA SURFACE, SON PROCÉDÉ DE FABRICATION, ET ARTICLES PRÉPARÉS À PARTIR DE CELLE-CI

(30) Priority: 27.09.2007 US 862389
(43) Date of publication of application: 07.07.2010
(73) Proprietor: SABIC Innovative Plastics IP B.V., 4612 PX Bergen Op Zoom OH (NL)
(72) Inventor: SHIPING, Ma, Tochigi 321-4341 (JP)
(74) Representative: Modiano, Micaela Nadia
(86) International application number: PCT/IB2008/053940
(87) International publication number: WO 2009/040772

(56) References cited:
- US-A1- 2002 193 476
- US-A1- 2006 052 519

## Description

### BACKGROUND

This invention is directed to thermoplastic compositions comprising polycarbonate, and in particular impact-modified thermoplastic polycarbonate compositions having improved surface appearance, methods of preparation of the thermoplastic composition, and articles prepared therefrom.

Polycarbonates are useful in the manufacture of articles and components for a wide range of applications, from, automotive parts to electronic appliances. A large number of these applications would benefit from articles having an improved surface appearance, while maintaining other material properties, including low coefficient of thermal expansion, impact strength, ductility and flow properties.

U.S. Patent No. 5,380,795 discloses a polymer composition comprising polycarbonate, a styrene-containing copolymer and/or graft copolymer, and a polycarbonate-polysiloxane copolymer. No examples are disclosed that teach surface appearance, impact strength and ductility.

### SUMMARY OF THE INVENTION

The above-described and other deficiencies of the art are met by a thermoplastic composition comprising 55 to 97 weight percent of a polycarbonate; 1 to 20 weight percent of a polysiloxane-polycarbonate comprising siloxane units of the formula: 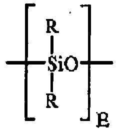 wherein each occurrence of R is the same or different, and is a C₁₋₃₀ monovalent organic group, wherein E is 1 to 1,000, and wherein the polysiloxane-polycarbonate comprises 0.1 weight percent to 15 weight percent siloxane units; 1 to 10 weight percent of an impact modifier; and 1 to 10 weight percent of a filler, wherein the filler has a particle size with a D₅₀ of less than 2.7 micrometers.

In another embodiment, a thermoplastic composition consists essentially of: 55 to 97 weight percent of a polycarbonate; 1 to 20 weight percent of a polysiloxane-polycarbonate comprising siloxane units of the formula: 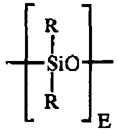 wherein each occurrence of R is the same or different, and is a C₁₋₃₀ monovalent organic group, wherein E is 1 to 1,000, and wherein the polysiloxane-polycarbonate comprises 0.1 weight percent to 15 weight percent siloxane units; 1 to 10 weight percent of an impact modifier; and 1 to 10 weight percent of a filler having an average particle size D₅₀ of less than 2.7 micrometers.

In an alternative embodiment, a method of preparing a thermoplastic composition comprises melt blending 55 to 97 weight percent of a polycarbonate; 1 to 20 weight percent of a polysiloxane-polycarbonate comprising siloxane units of formula 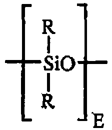 wherein each occurrence of R is the same or different, and is a C₁₋₃₀ monovalent organic group, wherein E is 1 to 1,000, and wherein the polysiloxane-polycarbonate comprises 0.1 weight percent to 15 weight percent siloxane units; 1 to 10 weight percent of an impact modifier; and 1 to 10 weight percent of a filler, wherein the filler has a particle size with a D₅₀ of less than 2.7 micrometers.

In still another embodiment, an article comprises the above-described thermoplastic compositions.

The above described and other features are exemplified by the following detailed description.

### DETAILED DESCRIPTION OF THE INVENTION

Surprisingly, it has been found that a thermoplastic composition comprising a polycarbonate, a polysiloxane-polycarbonate, an impact modifier, and an inorganic filler, such as talc, has an improved surface appearance without degradation of other properties when the filler has an average particle size, in particular a D₅₀ of less than 2.7 micrometers (micrometer). Such compositions have been found by the inventors to exhibit good physical properties such as impact resistance, tensile strength, modulus, and the like, and to provide combinations of properties that are not readily obtained in polycarbonate-containing thermoplastic materials having mineral fillers. In particular, the thermoplastic composition can provide improved surface appearance balance while retaining desirable properties including impact strength and flammability.

The thermoplastic composition includes a polycarbonate. As used herein, the terms "polycarbonate" mean compositions having repeating structural carbonate units of the formula (1): 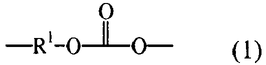 in which at least 60 percent of the total number of R' groups are aromatic organic radicals and the balance thereof are aliphatic, alicyclic, or aromatic radicals. In one embodiment, each R¹ is an aromatic organic radical, for example a radical of the formula (2):

-A¹-Y¹-A²- (2)

wherein each of A¹ and A² is a monocyclic divalent aryl radical and Y¹ is a bridging radical having one or two atoms that separate A¹ from A². In an exemplary embodiment, one atom separates A¹ from A². Illustrative non-limiting examples of radicals of this type are -O-, -S-, -S(O)-, -S(O)₂-, -C(O)-, methylene, cyclohexyl-methylene, 2-[2.2.1]-bicycloheptylidene, ethylidene, isopropylidene, neopentylidene, cyclohexylidene, cyclopentadecylidene, cyclododecylidene, and adamantylidene. The bridging radical Y¹ can be a hydrocarbon group or a saturated hydrocarbon group such as methylene, cyclohexylidene, or isopropylidene.

Polycarbonates can be produced by the interfacial or melt reaction of dihydroxy compounds having the formula HO-R¹-OH, which includes dihydroxy compounds of formula (3)

HO-A¹-Y¹-A²-OH (3)

wherein Y¹, A¹ and A² are as described above. Also included are bisphenol compounds of general formula (4): 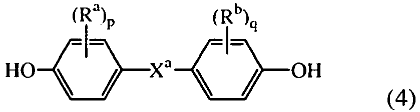 wherein R^{a} and R^{b} each represent a halogen atom or a monovalent hydrocarbon group and can be the same or different; p and q are each independently integers of 0 to 4; and X^{a} represents one of the groups of formula (5): 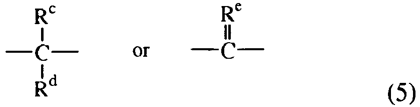 wherein R^{c} and R^{d} each independently represent a hydrogen atom or a monovalent linear or cyclic hydrocarbon group and Re is a divalent hydrocarbon group.

In an embodiment, a heteroatom-containing cyclic alkylidene group comprises at least one heteroatom with a valency of 2 or greater, and at least two carbon atoms. Heteroatoms for use in the heteroatom-containing cyclic alkylidene group include -O-, -S-, and -N(Z)-, where Z is a substituent group selected from hydrogen, hydroxy, C₁₋₁₂ alkyl, C₁₋₁₂ alkoxy, or C₁₋₁₂ acyl. Where present, the cyclic alkylidene group or heteroatom-containing cyclic alkylidene group can have 3 to 20 atoms, and can be a single saturated or unsaturated ring, or fused polycyclic ring system wherein the fused rings are saturated, unsaturated, or aromatic.

Other bisphenols containing substituted or unsubstituted cyclohexane units can be used, for example bisphenols of formula (6): 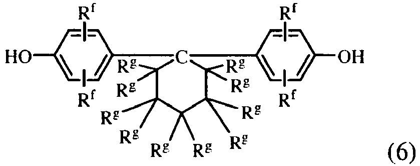 wherein each R^{f} is independently hydrogen, C₁₋₁₂ alkyl, or halogen; and each R^{g} is independently hydrogen or C₁₋₁₂ alkyl. The substituents can be aliphatic or aromatic, straight chain, cyclic, bicyclic, branched, saturated, or unsaturated. Such cyclohexane-containing bisphenols, for example the reaction product of two moles of a phenol with one mole of a hydrogenated isophorone, are useful for making polycarbonate polymers with high glass transition temperatures and high heat distortion temperatures. Cyclohexyl bisphenol containing polycarbonates, or a combination comprising at least one of the foregoing with other bisphenol polycarbonates, are supplied by Bayer Co. under the APEC^{®} trade name.

Other useful dihydroxy compounds having the formula HO-R¹-OH include aromatic dihydroxy compounds of formula (7): 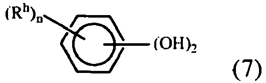 wherein each R^{h} is independently a halogen atom, a C₁₋₁₀ hydrocarbyl such as a C₁₋₁₀ alkyl group, a halogen substituted C₁₋₁₀ hydrocarbyl such as a halogen-substituted C₁₋₁₀ alkyl group, and n is 0 to 4. The halogen is usually bromine.

Exemplary dihydroxy compounds include the following: 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis (hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantine, (alpha, alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorine, 2,7-dihydroxypyrene, 6,6'-dihydroxy-3,3,3',3'- tetramethylspiro(bis)indane ("spirobiindane bisphenol"), 3,3-bis(4-hydroxyphenyl)phthalide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole, resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, and the like, as well as combinations comprising at least one of the foregoing dihydroxy compounds.

Specific examples of bisphenol compounds that can be represented by formula (3) include 1,1-bis(4-hydroxyphenyl) methane, 1,1-bis(4-hydroxyphenyl) ethane, 2,2-bis(4-hydroxyphenyl) propane (hereinafter "bisphenol A" or "BPA"), 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxy-t-butylphenyl) propane, 3,3-bis(4-hydroxyphenyl) phthalimidine, 2-phenyl-3,3-bis(4-hydroxyphenyl) phthalimidine (PPPBP), and 1,1-bis(4-hydroxy-3-methylphenyl)cyclohexane (DMBPC). Combinations comprising at least one of the foregoing dihydroxy compounds can also be used.

In a specific embodiment, the polycarbonate is a linear homopolymer derived from bisphenol A, in which each of A¹ and A² is p-phenylene and Y¹ is isopropylidene. The polycarbonates can have an intrinsic viscosity, as determined in chloroform at 25°C, of 0.3 to 1.5 deciliters per gram (dl/g), specifically 0.45 to 1.0 dl/g. The polycarbonates can have a weight average molecular weight (Mw) of 10,000 to 100,000, as measured by gel permeation chromatography (GPC) using a crosslinked styrene-divinyl benzene column, at a sample concentration of 1 milligram per milliliter, and as calibrated with polycarbonate standards.

In an embodiment, the polycarbonate is characterized by a melt volume flow rate ("MVR"), which measures the rate of extrusion of a thermoplastics through an orifice at a prescribed temperature and load. Polycarbonates useful for the formation of thin articles can have an MVR, measured at 300°C under a load of 1.2 kg according to ASTM D1238-04, of 0.5 to 80 cubic centimeters per 10 minutes (cc/10 min). In a specific embodiment, a useful polycarbonate composition has an MVR measured at 300°C under a load of 1.2 kg according to ASTM D1238-04. of 0.5 to 50 cc/10 min, specifically 0.5 to 25 cc/10 min, and more specifically 1 to 15 cc/10 min. Mixtures of polycarbonates of different flow properties can be used to achieve the overall desired flow property.

The polycarbonate can have a light transmittance greater than or equal to 55%, specifically greater than or equal to 60% and more specifically greater than or equal to 70%, as measured using a molded article of 3.2 ± 0.12 millimeters thickness and consisting of the polycarbonate, according to ASTM D1003-00. The polycarbonate can also have a haze less than or equal to 5%, specifically less than or equal to 4%, and most specifically less than or equal to 3%, as measured using a molded article of 3.2 millimeters thickness and consisting of the polycarbonate, according to ASTM D1003-00.

"Polycarbonates" as used herein further include homopolycarbonates, copolymers comprising different R¹ moieties in the carbonate (referred to herein as "copolycarbonates"), copolymers comprising carbonate units and other types of polymer units, such as ester units, polysiloxane units, and combinations comprising at least one of homopolycarbonates and copolycarbonates. As used herein, "combination" is inclusive of blends, mixtures, alloys, reaction products, and the like. A specific type of copolymer is a polyester carbonate, also known as a polyester-polycarbonate. Such copolymers further contain, in addition to recurring carbonate chain units of the formula (1), repeating units of formula (8): 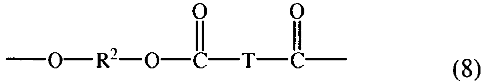 wherein R² is a divalent group derived from a dihydroxy compound, and can be, for example, a C₂₋₁₀ alkylene group, a C₆₋₂₀ alicyclic group, a C₆₋₂₀ aromatic group or a polyoxyalkylene group in which the alkylene groups contain 2 to 6 carbon atoms, specifically 2, 3, or 4 carbon atoms; and T divalent group derived from a dicarboxylic acid, and can be, for example, a C₂₋₁₀ alkylene group, a C₆₋₂₀ alicyclic group, a C₆₋₂₀ alkyl aromatic group, or a C₆₋₂₀ aromatic group.

In an embodiment, R² is a C₂₋₃₀ alkylene group having a straight chain, branched chain, or cyclic (including polycyclic) structure. In another embodiment, R² is derived from an aromatic dihydroxy compound of formula (4) above. In another embodiment, R² is derived from an aromatic dihydroxy compound of formula (7) above.

Examples of aromatic dicarboxylic acids that can be used to prepare the polyester units include isophthalic or terephthalic acid, 1,2-di(p-carboxyphenyl)ethane, 4,4'-dicarboxydiphenyl ether, 4,4'-bisbenzoic acid, and combinations comprising at least one of the foregoing acids. Acids containing fused rings can also be present, such as in 1,4-, 1,5-, or 2,6-naphthalenedicarboxylic acids. Specific dicarboxylic acids are terephthalic acid, isophthalic acid, naphthalene dicarboxylic acid, cyclohexane dicarboxylic acid, or combinations thereof. A specific dicarboxylic acid comprises a combination of isophthalic acid and terephthalic acid wherein the weight ratio of isophthalic acid to terephthalic acid is 91:9 to 2:98. In another specific embodiment, R² is a C₂₋₆ alkylene group and T is p-phenylene, m-phenylene, naphthalene, a divalent cycloaliphatic group, or a combination thereof. This class of polyester includes the poly(alkylene terephthalates).

The molar ratio of ester units to carbonate units in the copolymers can vary broadly, for example 1:99 to 99:1, specifically 10:90 to 90:10, more specifically 25:75 to 75:25, depending on the desired properties of the final composition.

In a specific embodiment, the polyester unit of a polyester-polycarbonate can be derived from the reaction of a combination of isophthalic and terephthalic diacids (or derivatives thereof) with resorcinol. In another specific embodiment, the polyester unit of a polyester-polycarbonate is derived from the reaction of a combination of isophthalic acid and terephthalic acid with bisphenol-A. In a specific embodiment, the polycarbonate units are derived from bisphenol A. In another specific embodiment, the polycarbonate units are derived from resorcinol and bisphenol A in a molar ratio of resorcinol carbonate units to bisphenol A carbonate units of 1:99 to 99:1.

Polycarbonates can be manufactured by processes such as interfacial polymerization and melt polymerization. Although the reaction conditions for interfacial polymerization can vary, an exemplary process generally involves dissolving or dispersing a dihydric phenol reactant in aqueous caustic soda or potash, adding the resulting mixture to a suitable water-immiscible solvent medium, and contacting the reactants with a carbonate precursor in the presence of a catalyst such as triethylamine or a phase transfer catalyst, under controlled pH conditions, e.g., 8 to 10. The most commonly used water immiscible solvents include methylene chloride, 1,2-dichloroethane, chlorobenzene, toluene, and the like.

Carbonate precursors include, for example, a carbonyl halide such as carbonyl bromide or carbonyl chloride, or a haloformate such as a bishaloformates of a dihydric phenol (e.g., the bischloroformates of bisphenol A, hydroquinone, or the like) or a glycol (e.g., the bishaloformate of ethylene glycol, neopentyl glycol, polyethylene glycol, or the like). Combinations comprising at least one of the foregoing types of carbonate precursors can also be used. In an exemplary embodiment, an interfacial polymerization reaction to form carbonate linkages uses phosgene as a carbonate precursor, and is referred to as a phosgenation reaction.

Among the phase transfer catalysts that can be used are catalysts of the formula (R³)₄Q⁺X, wherein each R³ is the same or different, and is a C₁₋₁₀ alkyl group; Q is a nitrogen or phosphorus atom; and X is a halogen atom or a C₁₋₈ alkoxy group or C₆₋₁₈ aryloxy group. Useful phase transfer catalysts include, for example, [CH₃(CH₂)₃]₄NX, [CH₃(CH₂)₃]₄PX, [CH₃(CH₂)₅]₄NX, [CH₃(CH₂)₆]₄NX, [CH₃(CH₂)₄]₄NX, CH₃[CH₃(CH₂)₃]₃NX, and CH₃[CH₃(CH₂)₃]₃NX, wherein X is Cl⁻, Br⁻, a C₁₋₈ alkoxy group or a C₆₋₁₈ aryloxy group. An effective amount of a phase transfer catalyst can be 0.1 to 10 weight percent based on the weight of bisphenol in the phosgenation mixture. In another embodiment an effective amount of phase transfer catalyst can be 0.5 to 2 weight percent based on the weight of bisphenol in the phosgenation mixture.

All types of polycarbonate end groups are contemplated as being useful in the polycarbonate composition, provided that such end groups do not significantly adversely affect desired properties of the compositions.

Branched polycarbonate blocks can be prepared by adding a branching agent during polymerization. These branching agents include polyfunctional organic compounds containing at least three functional groups selected from hydroxyl, carboxyl, carboxylic anhydride, haloformyl, and mixtures of the foregoing functional groups. Specific examples include trimellitic acid, trimellitic anhydride, trimellitic trichloride, tris-p-hydroxy phenyl ethane, isatin-bis-phenol, tris-phenol TC (1,3,5-tris((p-hydroxyphenyl)isopropyl)benzene), tris-phenol PA (4(4(1,1-bis(p-hydroxyphenyl)-ethyl) alpha, alpha-dimethyl benzyl)phenol), 4-chloroformyl phthalic anhydride, trimesic acid, and benzophenone tetracarboxylic acid. The branching agents can be added at a level of 0.05 to 2.0 weight percent. Mixtures comprising linear polycarbonates and branched polycarbonates can be used.

A chain stopper (also referred to as a capping agent) can be included during polymerization. The chain stopper limits molecular weight growth rate, and so controls molecular weight in the polycarbonate. Exemplary chain stoppers include certain mono-phenolic compounds, mono-carboxylic acid chlorides, and/or mono-chloroformates. Mono-phenolic chain stoppers are exemplified by monocyclic phenols such as phenol and C₁-C₂₂ alkyl-substituted phenols such as p-cumyl-phenol, resorcinol monobenzoate, and p-and tertiary-butyl phenol; and monoethers of diphenols, such as p-methoxyphenol. Alkyl-substituted phenols with branched chain alkyl substituents having 8 to 9 carbon atom can be specifically mentioned. Certain mono-phenolic UV absorbers can also be used as a capping agent, for example 4-substituted-2-hydroxybenzophenones and their derivatives, aryl salicylates, monoesters of diphenols such as resorcinol monobenzoate, 2-(2-hydroxyaryl)-benzotriazoles and their derivatives, 2-(2-hydroxyaryl)-1,3,5-triazines and their derivatives, and the like, or a combination of at least one of the foregoing compounds.

Mono-carboxylic acid chlorides can also be used as chain stoppers. These include monocyclic, mono-carboxylic acid chlorides such as benzoyl chloride, C₁-C₂₁ alkyl-substituted benzoyl chloride, toluoyl chloride, halogen-substituted benzoyl chloride, bromobenzoyl chloride, cinnamoyl chloride, 4-nadimidobenzoyl chloride, and combinations thereof; polycyclic, mono-carboxylic acid chlorides such as trimellitic anhydride chloride, and naphthoyl chloride; and combinations of monocyclic and polycyclic mono-carboxylic acid chlorides. Chlorides of aliphatic monocarboxylic acids with less than or equal to 22 carbon atoms are useful. Functionalized chlorides of aliphatic monocarboxylic acids, such as acryloyl chloride and methacryoyl chloride, are also useful. Also useful are mono-chloroformates including monocyclic, mono-chlorofoimates, such as phenyl chloroformate, alkyl-substituted phenyl chloroformate, p-cumyl phenyl chloroformate, toluene chloroformate, and combinations thereof.

Alternatively, melt processes can be used to make the polycarbonates. Generally, in the melt polymerization process, polycarbonates can be prepared by co-reacting, in a molten state, the dihydroxy reactant(s) and a diaryl carbonate ester, such as diphenyl carbonate, in the presence of a transesterification catalyst in a Banbury^{®} mixer, twin screw extruder, or the like to form a uniform dispersion. Volatile monohydric phenol is removed from the molten reactants by distillation and the polymer is isolated as a molten residue. A specifically useful melt process for making polycarbonates uses a diaryl carbonate ester having electron-withdrawing substituents on the aryls. Examples of specifically useful diaryl carbonate esters with electron withdrawing substituents include bis(4-nitrophenyl)carbonate, bis(2-chlorophenyl)carbonate, bis(4-chlorophenyl)carbonate, bis(methyl salicyl)carbonate, bis(4-methylcarboxylphenyl) carbonate, bis(2-acetylphenyl) carboxylate, bis(4-acetylphenyl) carboxylate, or a combination comprising at least one of the foregoing. In addition, transesterification catalysts for use can include phase transfer catalysts of formula (R³)₄Q⁺X above, wherein each R³, Q, and X are as defined above. Examples of transesterification catalysts include tetrabutylammonium hydroxide, methyltributylammonium hydroxide, tetrabutylammonium acetate, tetrabutylphosphonium hydroxide, tetrabutylphosphonium acetate, tetrabutylphosphonium phenolate, or a combination comprising at least one of the foregoing.

The polyester-polycarbonates can also be prepared by interfacial polymerization. Rather than utilizing the dicarboxylic acid per se, it is possible, and sometimes even preferred, to employ the reactive derivatives of the acid, such as the corresponding acid halides, in particular the acid dichlorides and the acid dibromides. Thus, for example instead of using isophthalic acid, terephthalic acid, or a combination comprising at least one of the foregoing, it is possible to employ isophthaloyl dichloride, terephthaloyl dichloride, and a combination comprising at least one of the foregoing.

In addition to the polycarbonates described above, combinations of the polycarbonate with other thermoplastic polymers, for example combinations of homopolycarbonates and/or polycarbonate copolymers with polyesters, can be used. Useful polyesters can include, for example, polyesters having repeating units of formula (8), which include poly(alkylene dicarboxylates), liquid crystalline polyesters, and polyester copolymers. The polyesters described herein are generally completely miscible with the polycarbonates when blended.

The polyesters can be obtained by interfacial polymerization or melt-process condensation as described above, by solution phase condensation, or by transesterification polymerization wherein, for example, a dialkyl ester such as dimethyl terephthalate can be transesterified with ethylene glycol using acid catalysis, to generate poly(ethylene terephthalate). It is possible to use a branched polyester in which a branching agent, for example, a glycol having three or more hydroxyl groups or a trifunctional or multifunctional carboxylic acid has been incorporated. Furthermore, it is sometime desirable to have various concentrations of acid and hydroxyl end groups on the polyester, depending on the ultimate end use of the composition.

Useful polyesters can include aromatic polyesters, poly(alkylene esters) including poly(alkylene arylates), and poly(cycloalkylene diesters). Aromatic polyesters can have a polyester structure according to formula (8), wherein R² and T are each aromatic groups as described hereinabove. In an embodiment, useful aromatic polyesters can include, for example, poly(isophthalate-terephthalate-resorcinol) esters, poly(isophthalate-terephthalate-bisphenol-A) esters, poly[(isophthalate-terephthalate-resorcinol) ester-co-(isophthalate-terephthalate-bisphenol-A)] ester, or a combination comprising at least one of these. Also contemplated are aromatic polyesters with a minor amount, e.g., 0.5 to 10 weight percent, based on the total weight of the polyester, of units derived from an aliphatic diacid and/or an aliphatic polyol to make copolyesters. Poly(alkylene arylates) can have a polyester structure according to formula (8), wherein T comprises groups derived from aromatic dicarboxylates, cycloaliphatic dicarboxylic acids, or derivatives thereof. Examples of specifically useful T groups include 1,2-, 1,3-, and 1,4-phenylene; 1,4- and 1,5- naphthylenes; cis- or trans-1,4-cyclohexylene; and the like. Specifically, where T is 1,4-phenylene, the poly(alkylene arylate) is a poly(alkylene terephthalate). In addition, for poly(alkylene arylate), specifically useful alkylene groups D include, for example, ethylene, 1,4-butylene, and bis-(alkylene-disubstituted cyclohexane) including cis- and/or trans-1,4-(cyclohexylene)dimethylene. Examples of poly(alkylene terephthalates) include poly(ethylene terephthalate) (PET), poly(1,4-butylene terephthalate) (PBT), and poly(propylene terephthalate) (PPT). Also useful are poly(alkylene naphthoates), such as poly(ethylene naphthanoate) (PEN), and poly(butylene naphthanoate) (PBN). A useful poly(cycloalkylene diester) is poly(cyclohexanedimethylene terephthalate) (PCT). Combinations comprising at least one of the foregoing polyesters can also be used.

Copolymers comprising alkylene terephthalate repeating ester units with other ester groups can also be useful. Useful ester units can include different alkylene terephthalate units, which can be present in the polymer chain as individual units, or as blocks of poly(alkylene terephthalates). Specific examples of such copolymers include poly(cyclohexanedimethylene terephthalate)-co-poly(ethylene terephthalate), abbreviated as PETG where the polymer comprises greater than or equal to 50 mol% of poly(ethylene terephthalate), and abbreviated as PCTG where the polymer comprises greater than 50 mol% of poly(1,4-cyclohexanedimethylene terephthalate).

Poly(cycloalkylene diester)s can also include poly(alkylene cyclohexanedicarboxylate)s. Of these, a specific example is poly(1,4-cyclohexanedimethanol-1,4-cyclohexanedicarboxylate) (PCCD), having recurring units of formula (9): 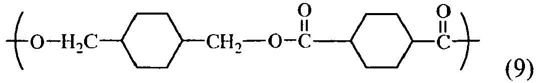 wherein, as described using formula (8), R² is a 1,4-cyclohexanedimethylene group derived from 1,4-cyclohexanedimethanol, and T is a cyclohexane ring derived from cyclohexanedicarboxylate or a chemical equivalent thereof, and can comprise the cis-isomer, the trans-isomer, or a combination comprising at least one of the foregoing isomers.

The polycarbonate and polyester and/or polyester-polycarbonate can be used in a weight ratio of 1:99 to 99:1, specifically 10:90 to 90:10, and more specifically 30:70 to 70:30, depending on the function and properties desired.

The polyester-polycarbonates can have a weight-averaged molecular weight (M_{w}) of 1,500 to 100,000, specifically 1,700 to 50,000, and more specifically 2,000 to 40,000. Molecular weight determinations are performed using gel permeation chromatography (GPC), using a crosslinked styrene-divinylbenzene column and calibrated to polycarbonate references. Samples are prepared at a concentration of 1 mg/ml, and are eluted at a flow rate of 1.0 ml/min.

Where used, it is desirable for a polyester-polycarbonate to have an MVR of 5 to 150 cc/10 min., specifically 7 to 125 cc/10 min, more specifically 9 to 110 cc/10 min, and still more specifically 10 to 100 cc/10 min., measured at 300°C and a load of 1.2 kilograms according to ASTM D1238-04. Commercial polyester blends with polycarbonate are marketed under the trade name XYLEX^{®}, including for example XYLEX^{®} X7300, and commercial polyester-polycarbonates are marketed under the tradename LEXAN^{®} SLX polymers, including for example LEXAN^{®} SLX-9000, and are available from GE Plastics.

In one embodiment, the thermoplastic composition comprises 55 to 97 weight percent of a polycarbonate, specifically 60 to 97 weight percent, more specifically 70 to 95 weight percent, and still more specifically 80 to 95 weight percent, based on the total weight of the thermoplastic composition.

The thermoplastic composition further comprises a polysiloxane-polycarbonate copolymer, also referred to as a polysiloxane-polycarbonate. The polysiloxane (also referred to as "polydiorganosiloxane") blocks of the copolymer comprise repeating siloxane units (also referred to as "diorganosiloxane units") of formula (10): 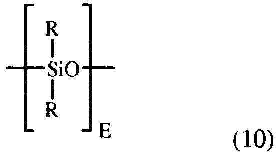 wherein each occurrence of R is same or different, and is a C₁₋₁₃ monovalent organic radical. For example, R can independently be a C₁-C₁₃ alkyl group, C₁-C₁₃ alkoxy group, C₁-C₁₃ alkenyl group, C₂-C₁₃ alkenyloxy group, C₃-C₆ cycloalkyl group, C₃-C₆ cycloalkoxy group, C₆-C₁₄ aryl group, C₆-C₁₀ aryloxy group, C₇-C₁₃ arylalkyl group, C₇-C₁₃ arylalkoxy group, C₇-C₁₃ alkylaryl group, or C₇-C₁₃ alkylaryloxy group. The foregoing groups can be fully or partially halogenated with fluorine, chlorine, bromine, or iodine, or a combination thereof. Combinations of the foregoing R groups can be used in the same copolymer.

The value of E in formula (10) can vary widely depending on the type and relative amount of each component in the thermoplastic composition, the desired properties of the composition, and like considerations. Generally, E can have an average value of 2 to 1,000, specifically 2 to 500, and more specifically 5 to 100. In one embodiment, E has an average value of 10 to 75, and in still another embodiment, E has an average value of 20 to 60. Where E is of a lower value, e.g., less than 40, it can be desirable to use a relatively larger amount of the polycarbonate-polysiloxane copolymer. Conversely, where E is of a higher value, e.g., greater than 40, it can be necessary to use a relatively lower amount of the polycarbonate-polysiloxane copolymer.

A combination of a first and a second (or more) polysiloxane-polycarbonate copolymer can be used, wherein the average value of E of the first copolymer is less than the average value of E of the second copolymer.

In one embodiment, the polydiorganosiloxane blocks are provided by repeating structural units of formula (11): 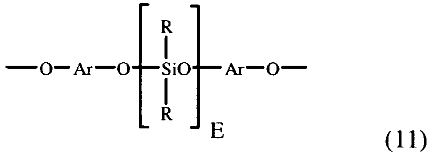 wherein E is as defined above; each R can independently be the same or different, and is as defined above; and each Ar can independently be the same or different, and is a substituted or unsubstituted C₆-C₃₀ arylene radical, wherein the bonds are directly connected to an aromatic moiety. Useful Ar groups in formula (11) can be derived from a C₆-C₃₀ dihydroxyarylene compound, for example a dihydroxyarylene compound of formula (3), (4), or (7) above. Combinations comprising at least one of the foregoing dihydroxyarylene compounds can also be used. Specific examples of dihydroxyarylene compounds are 1,1-bis(4-hydroxyphenyl) methane, 1,1-bis(4-hydroxyphenyl) ethane, 2,2-bis(4-hydroxyphenyl) propane, 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxyphenyl) cyclohexane, bis(4-hydroxyphenyl sulphide), and 1,1-bis(4-hydroxy-t-butylphenyl) propane. Combinations comprising at least one of the foregoing dihydroxy compounds can also be used.

Units of formula (11) can be derived from the corresponding dihydroxy compound of formula (12): 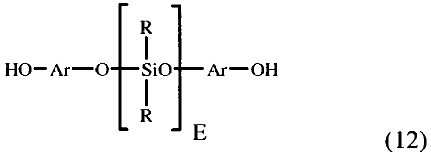 wherein R, Ar, and E are as described above. Compounds of formula (12) can be obtained by the reaction of a dihydroxyarylene compound with, for example, an alpha, omega-bisacetoxypolydiorangonosiloxane under phase transfer conditions.

In another embodiment, polydiorganosiloxane blocks comprise units of formula (13): 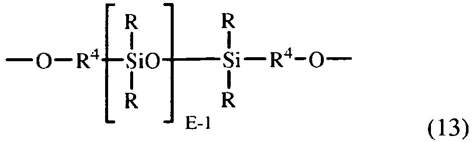 wherein R and E are as described above, and each occurrence of R⁴ is independently a divalent C₁-C₃₀ alkylene, and wherein the polymerized polysiloxane unit is the reaction residue of its corresponding dihydroxy compound. In a specific embodiment, the polydiorganosiloxane blocks are provided by repeating structural units of formula (14): 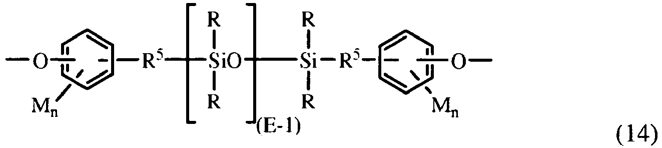 wherein R and E are as defined above. Each R⁵ in formula (14) is independently a divalent C₂-C₈ aliphatic group. Each M in formula (14) can be the same or different, and can be a halogen, cyano, nitro, C₁-C₈ alkylthio, C₁-C₈ alkyl, C₁-C₈ alkoxy, C₂-C₈ alkenyl, C₂-c₈ alkenyloxy group, C₃-C₈ cycloalkyl, C₃-C₈ cycloalkoxy, C₆-C₁₀ aryl, C₆-C₁₀ aryloxy, C₇-C₁₂ arylalkyl, C₇-C₁₂ arylalkoxy, C₇-C₁₂ alkylaryl, or C₇-C₁₂ alkylaryloxy, wherein each n is independently 0, 1, 2, 3, or 4.

In one embodiment, M is bromo or chloro, an alkyl group such as methyl, ethyl, or propyl, an alkoxy group such as methoxy, ethoxy, or propoxy, or an aryl group such as phenyl, chlorophenyl, or tolyl; R⁵ is a dimethylene, trimethylene or tetramethylene group; and R is a C₁₋₈ alkyl, haloalkyl such as trifluoropropyl, cyanoalkyl, or aryl such as phenyl, chlorophenyl or tolyl. In another embodiment, R is methyl, or a mixture of methyl and trifluoropropyl, or a mixture of methyl and phenyl. In still another embodiment, M is methoxy, n is one, R⁵ is a divalent C₁-C₃ aliphatic group, and R is methyl.

Units of formula (14) can be derived from the corresponding dihydroxy polydiorganosiloxane (15): 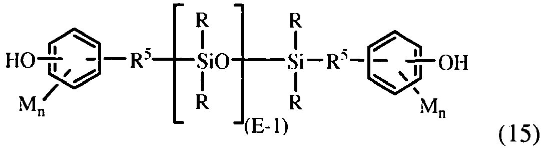 wherein R, E, M, R⁵, and n are as described above. Such dihydroxy polysiloxanes can be made by effecting a platinum catalyzed addition between a siloxane hydride of formula (16): 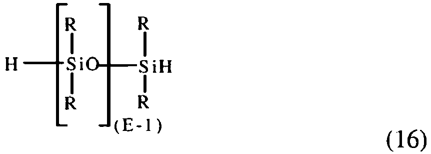 wherein R and E are as previously defined, and an aliphatically unsaturated monohydric phenol. Useful aliphatically unsaturated monohydric phenols included, for example, eugenol, 2-allylphenol, 4-allyl-2-methylphenol, 4-allyl-2-phenylphenol, 4-allyl-2-bromophenol, 4-allyl-2-t-butoxyphenol, 4-phenyl-2-phenylphenol, 2-methyl-4-propylphenol, 2-allyl-4,6-dimethylphenol, 2-allyl-4-bromo-6-methylphenol, 2-allyl-6-methoxy-4-methylphenol and 2-allyl-4,6-dimethylphenol. Mixtures comprising at least one of the foregoing can also be used.

In an exemplary embodiment, the polysiloxane block is a poly(dimethyl siloxane) (PDMS) block.

The polysiloxane-polycarbonate can comprise 85 to 99 weight percent of carbonate units and 1 to 15 weight percent siloxane units. Within this range, the polysiloxane-polycarbonate copolymer can comprise 88, 90, 92, 94, 96, or 98 weight percent of carbonate units and correspondingly 2, 4, 6, 8, 10, or 12 weight percent of siloxane units. In a specific embodiment, the polysiloxane-polycarbonate comprises 85 to 98 weight percent of carbonate units and 2 to 15 weight percent siloxane units. In another specific embodiment, the polysiloxane-polycarbonate comprises 90 to 98 weight percent of carbonate units and 2 to 10 weight percent siloxane units.

In an embodiment, the polysiloxane-polycarbonate can comprise polysiloxane units, and carbonate units derived from bisphenol A, e.g., the dihydroxy compound of formula (3) in which each of A¹ and A² is p-phenylene and Y¹ is isopropylidene. Polysiloxane-polycarbonates can have a weight average molecular weight of 2,000 to 100,000, specifically 5,000 to 50,000 as measured by gel permeation chromatography using a crosslinked styrene-divinyl benzene column, at a sample concentration of 1 milligram per milliliter, and as calibrated with polycarbonate standards.

The polysiloxane-polycarbonate can have a melt volume flow rate, measured at 300°C under a load of 1.2 kg, of 1 to 50 cubic centimeters per 10 minutes (cc/10 min), specifically 2 to 30 cc/10 min. Mixtures of polysiloxane-polycarbonates of different flow properties can be used to achieve the overall desired flow property. In an embodiment, exemplary polysiloxane-polycarbonates are marketed under the trade name LEXAN^{®} EXL polycarbonates, available from GE Plastics.

The polysiloxane-polycarbonate is used in the thermoplastic composition in an amount of 1 to 20 weight percent, and still more specifically 1 to 10 weight percent, based on the total weight of the thermoplastic composition.

In one embodiment, the thermoplastic composition comprises siloxane units of formula (10) in an amount of less than or equal to 2 weight percent, specifically 0.1 to 2 weight percent, more specifically 0.1 to 1.5 weight percent, and still more specifically 0.1 to 1.0 weight percent, based on the total weight of the thermoplastic composition.

The thermoplastic composition can further include impact modifier(s). These impact modifiers include elastomer-modified graft copolymers comprising (i) an elastomeric (i.e., rubbery) polymer substrate having a glass transition temperature (T_{g}) less than or equal to 10°C, more specifically less than or equal to -10°C, or more specifically -40°C to -80°C, and (ii) a rigid polymeric substrate grafted to the elastomeric polymer substrate. As is known, elastomer-modified graft copolymers can be prepared by first providing the elastomeric polymer, then polymerizing the constituent monomer(s) of the rigid phase in the presence of the elastomer to obtain the graft copolymer. The grafts can be attached as graft branches or as shells to an elastomer core. The shell can merely physically encapsulate the core, or the shell can be partially or essentially completely grafted to the core.

Materials for use as the elastomer phase include, for example, conjugated diene rubbers; copolymers of a conjugated diene with less than or equal to 50 weight percent of a copolymerizable monomer; olefin rubbers such as ethylene propylene copolymers (EPR) or ethylene-propylene-diene monomer rubbers (EPDM); ethylene-vinyl acetate rubbers; silicone rubbers; elastomeric C₁₋₈ alkyl (meth)acrylates; elastomeric copolymers of C₁₋₈ alkyl (meth)acrylates with butadiene and/or styrene; or combinations comprising at least one of the foregoing elastomers.

Conjugated diene monomers for preparing the elastomer phase include those of formula (17): 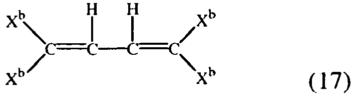 wherein each X^{b} is independently hydrogen, C₁-C₅ alkyl, or the like. Examples of conjugated diene monomers that can be used are butadiene, isoprene, 1,3-heptadiene, methyl-1,3-pentadiene, 2,3-dimethyl-1,3-butadiene, 2-ethyl-1,3-pentadiene; 1,3- and 2,4-hexadienes, and the like, as well as combinations comprising at least one of the foregoing conjugated diene monomers. Specific conjugated diene homopolymers include polybutadiene and polyisoprene.

Copolymers of a conjugated diene rubber can also be used, for example those produced by aqueous radical emulsion polymerization of a conjugated diene and at least one monomer copolymerizable therewith. Monomers that are useful for copolymerization with the conjugated diene include monovinylaromatic monomers containing condensed aromatic ring structures, such as vinyl naphthalene, vinyl anthracene, and the like, or monomers of formula (18): 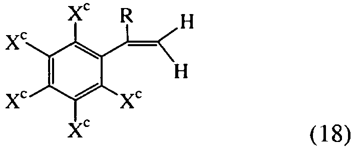 wherein each X^{c} is independently hydrogen, C₁-C₁₂ alkyl, C₃-C₁₂ cycloalkyl, C₆-C₁₂ aryl, C₇-C₁₂ aralkyl, C₇-C₁₂ alkylaryl, C₁-C₁₂ alkoxy, C₃-C₁₂ cycloalkoxy, C₆-C₁₂ aryloxy, chloro, bromo, or hydroxy, and R is hydrogen, C₁-C₅ alkyl, bromo, or chloro. Exemplary monovinylaromatic monomers that can be used include styrene, 3-methylstyrene, 3,5-diethylstyrene, 4-n-propylstyrene, alpha-methylstyrene, alpha-methyl vinyltoluene, alpha-chlorostyrene, alpha-bromostyrene, dichlorostyrene, dibromostyrene, tetra-chlorostyrene, and the like, and combinations comprising at least one of the foregoing compounds. Styrene and/or alpha-methylstyrene can be used as monomers copolymerizable with the conjugated diene monomer.

Other monomers that can be copolymerized with the conjugated diene are monovinylic monomers such as itaconic acid, acrylamide, N-substituted acrylamide or methacrylamide, maleic anhydride, maleimide, N-alkyl-, aryl-, or haloaryl-substituted maleimide, glycidyl (meth)acrylates, and monomers of the generic formula (19): 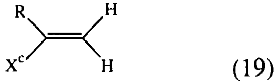 wherein R is hydrogen, C₁-C₅ alkyl, bromo, or chloro, and X^{c} is cyano, C₁-C₁₂ alkoxycarbonyl, C₁-C₁₂ aryloxycarbonyl, hydroxy carbonyl, or the like. Examples of monomers of formula (19) include acrylonitrile, methacrylonitiile, alpha-chloroacrylonitrile, beta-chloroacrylonitrile, alpha-bromoacrylonitrile, acrylic acid, methyl (meth)acrylate, ethyl (meth)acrylate, n-butyl (meth)acrylate, t-butyl (meth)acrylate, n-propyl (meth)acrylate, isopropyl (meth)acrylate, 2-ethylhexyl (meth)acrylate, and the like, and combinations comprising at least one of the foregoing monomers. Monomers such as n-butyl acrylate, ethyl acrylate, and 2-ethylhexyl acrylate are commonly used as monomers copolymerizable with the conjugated diene monomer. Combinations of the foregoing monovinyl monomers and monovinylaromatic monomers can also be used.

(Meth)acrylate monomers for use in the elastomeric phase can be cross-linked, particulate emulsion homopolymers or copolymers of C₁₋₈ alkyl (meth)acrylates, in particular C₄₋₆ alkyl acrylates, for example n-butyl acrylate, t-butyl acrylate, n-propyl acrylate, isopropyl acrylate, 2-ethylhexyl acrylate, and the like, and combinations comprising at least one of the foregoing monomers. The C₁₋₈ alkyl (meth)acrylate monomers can optionally be polymerized in admixture with less than or equal to 15 weight percent of comonomers of formulas (17), (18), or (19), based on the total monomer weight. Exemplary comonomers include but are not limited to butadiene, isoprene, styrene, methyl methacrylate, phenyl methacrylate, phenethylmethacrylate, N-cyclohexylacrylamide, vinyl methyl ether or acrylonitrile, and combinations comprising at least one of the foregoing comonomers. Optionally, less than or equal to 5 weight percent of a polyfunctional crosslinking comonomer can be present, based on the total monomer weight. Such polyfunctional crosslinking comonomers can include, for example, divinylbenzene, alkylenediol di(meth)acrylates such as glycol bisacrylate, alkylenetriol tri(meth)acrylates, polyester di(meth)acrylates, bisacrylamides, triallyl cyanurate, triallyl isocyanurate, allyl (meth)acrylate, diallyl maleate, diallyl fumarate, diallyl adipate, triallyl esters of citric acid, triallyl esters of phosphoric acid, and the like, as well as combinations comprising at least one of the foregoing crosslinking agents.

The elastomer phase can be polymerized by mass, emulsion, suspension, solution or combined processes such as bulk-suspension, emulsion-bulk, bulk-solution or other techniques, using continuous, semi-batch, or batch processes. The particle size of the elastomer substrate is not critical. For example, an average particle size of 0.001 to 25 micrometers, specifically 0.01 to 15 micrometers, or even more specifically 0.1 to 8 micrometers can be used for emulsion based polymerized rubber lattices. A particle size of 0.5 to 10 micrometers, specifically 0.6 to 1.5 micrometers can be used for bulk polymerized rubber substrates. Particle size can be measured by simple light transmission methods or capillary hydrodynamic chromatography (CHDF). The elastomer phase can be a particulate, moderately cross-linked conjugated butadiene or C₄₋₆ alkyl acrylate rubber, and specifically has a gel content greater than 70%. Also useful are combinations of butadiene with styrene and/or C₄₋₆ alkyl acrylate rubbers.

The elastomeric phase comprises 5 to 95 weight percent of the total graft copolymer, more specifically 20 to 90 weight percent, and even more specifically 40 to 85 weight percent of the elastomer-modified graft copolymer, the remainder being the rigid graft phase.

The rigid phase of the elastomer-modified graft copolymer can be formed by graft polymerization of a combination comprising a monovinylaromatic monomer and optionally at least one comonomer in the presence of at least one elastomeric polymer substrates. The above-described monovinylaromatic monomers of formula (18) can be used in the rigid graft phase, including styrene, alpha-methyl styrene, halostyrenes such as dibromostyrene, vinyltoluene, vinylxylene, butylstyrene, para-hydroxystyrene, methoxystyrene, or the like, or combinations comprising at least one of the foregoing monovinylaromatic monomers. Useful comonomers include, for example, the above-described monovinylic monomers and/or monomers of the general formula (17). In one embodiment, R is hydrogen or C₁-C₂ alkyl, and X^{c} is cyano or C₁-C₁₂ alkoxycarbonyl. Exemplary comonomers for use in the rigid phase include acrylonitrile, methacrylonitrile, methyl (meth)acrylate, ethyl (meth)acrylate, n-propyl (meth)acrylate, isopropyl (meth)acrylate, and the like, and combinations comprising at least one of the foregoing comonomers.

The relative ratio of monovinylaromatic monomer and comonomer in the rigid graft phase can vary widely depending on the type of elastomer substrate, type of monovinylaromatic monomer(s), type of comonomer(s), and the desired properties of the impact modifier. The rigid phase can generally comprise less than or equal to 100 weight percent of monovinyl aromatic monomer, specifically 30 to 100 weight percent, more specifically 50 to 90 weight percent monovinylaromatic monomer, with the balance of the rigid phase being comonomer(s).

Depending on the amount of elastomer-modified polymer present, a separate matrix or continuous phase of ungrafted rigid polymer or copolymer can be simultaneously obtained along with the elastomer-modified graft copolymer. Such impact modifiers can comprise 40 to 95 weight percent elastomer-modified graft copolymer and 5 to 65 weight percent graft copolymer, based on the total weight of the impact modifier. In another embodiment, such impact modifiers comprise 50 to 85 weight percent, more specifically 75 to 85 weight percent rubber-modified graft copolymer, together with 15 to 50 weight percent, more specifically 15 to 25 weight percent graft copolymer, based on the total weight of the impact modifier.

Another specific type of elastomer-modified impact modifier comprises structural units derived from at least one silicone rubber monomer, a branched acrylate rubber monomer having the formulas H₂C=C(R^{d})C(O)OCH₂CH₂R^{e}, wherein R^{d} is hydrogen or a C₁-C₈ linear or branched alkyl group and R^{e} is a branched C₃-C₁₆ alkyl group; a first graft link monomer; a polymerizable alkenyl-containing organic material; and a second graft link monomer. The silicone rubber monomer can comprise, for example, a cyclic siloxane, tetraalkoxysilane, trialkoxysilane, (acryloxy)alkoxysilane, (mercaptoalkyl)alkoxysilane, vinylalkoxysilane, or allylalkoxysilane, alone or in combination, e.g., decamethylcyclopentasiloxane, dodecamethylcyclohexasiloxane, trimethyltriphenylcyclotrisiloxane, tetramethyltetraphenylcyclotetrasiloxane, tetramethyltetravinylcyclotetrasiloxane, octaphenylcyclotetrasiloxane, octamethylcyclotetrasiloxane and/or tetraethoxysilane.

Exemplary branched acrylate rubber monomers include iso-octyl acrylate, 6-methyloctyl acrylate, 7-methyloctyl acrylate, 6-methylheptyl acrylate, and the like, or a combination comprising at least one of the foregoing. The polymerizable alkenyl-containing organic material can be, for example, a monomer of formula (18) or (19), e.g., styrene, alpha-methylstyrene, acrylonitrile, methacrylonitrile, or an unbranched (meth)acrylate such as methyl methacrylate, 2-ethylhexyl methacrylate, methyl acrylate, ethyl acrylate, n-propyl acrylate, or the like, alone or in combination.

The first graft link monomer can be an (acryloxy)alkoxysilane, a (mercaptoalkyl)alkoxysilane, a vinylalkoxysilane, or an allylalkoxysilane, alone or in combination, e.g., (gamma-methacryloxypropyl)(dimethoxy)methylsilane and/or (3-mercaptopropyl)trimethoxysilane. The second graft link monomer is a polyethylenically unsaturated compound having at least one allyl group, such as allyl methacrylate, triallyl cyanurate, triallyl isocyanurate, and the like, or a combination comprising at least one of the foregoing.

The silicone-acrylate impact modifiers can be prepared by emulsion polymerization, wherein, for example a silicone rubber monomer is reacted with a first graft link monomer at a temperature from 30°C to 110°C to form a silicone rubber latex, in the presence of a surfactant such as dodecylbenzenesulfonic acid. Alternatively, a cyclic siloxane such as cyclooctamethyltetrasiloxane and a tetraethoxyorthosilicate can be reacted with a first graft link monomer such as (gamma-methacryloxypropyl)methyldimethoxysilane. A branched acrylate rubber monomer is then polymerized with the silicone rubber particles, optionally in presence of a cross linking monomer, such as allyl methacrylate, in the presence of a free radical generating polymerization catalyst such as benzoyl peroxide. This latex is then reacted with a polymerizable alkenyl-containing organic material and a second graft link monomer. The latex particles of the graft silicone-acrylate rubber hybrid can be separated from the aqueous phase through coagulation (by treatment with a coagulant) and dried to a fine powder to produce the silicone-acrylate rubber impact modifier. This method can be generally used for producing the silicone-acrylate impact modifier having a particle size of 100 nanometers to 2 micrometers.

Processes known for the formation of the foregoing elastomer-modified graft copolymers include mass, emulsion, suspension, and solution processes, or combined processes such as bulk-suspension, emulsion-bulk, bulk-solution or other techniques, using continuous, semi-batch, or batch processes.

In one embodiment the foregoing types of impact modifiers are prepared by an emulsion polymerization process that is free of basic materials such as alkali metal salts of C₆₋₃₀ fatty acids, for example sodium stearate, lithium stearate, sodium oleate, potassium oleate, and the like, alkali metal carbonates, amines such as dodecyl dimethyl amine, dodecyl amine, and the like, and ammonium salts of amines. Such materials are commonly used as surfactants in emulsion polymerization, and can catalyze transesterification and/or degradation of polycarbonates. Instead, ionic sulfate, sulfonate or phosphate surfactants can be used in preparing the impact modifiers, particularly the elastomeric substrate portion of the impact modifiers. Useful surfactants include, for example, C₁₋₂₂ alkyl or C₇₋₂₅ alkylaryl sulfonates, C₁₋₂₂ alkyl or C₇₋₂₅ alkylaryl sulfates, C₁₋₂₂ alkyl or C₇₋₂₅ alkylaryl phosphates, substituted silicates, or a combination comprising at least one of the foregoing. A specific surfactant is a C₆₋₁₆, specifically a C₈₋₁₂ alkyl sulfonate. This emulsion polymerization process is described and disclosed in various patents and literature of such companies as Rohm & Haas and General Electric Company. In the practice, any of the above-described impact modifiers can be used providing it is free of the alkali metal salts of fatty acids, alkali metal carbonates and other basic materials.

A specific impact modifier of this type is a methyl methacrylate-butadienestyrene (MBS) impact modifier wherein the butadiene substrate is prepared using above-described sulfonates, sulfates, or phosphates as surfactants. Other examples of elastomer-modified graft copolymers in addition to ABS and MBS include but are not limited to acrylonitrile-styrene-butyl acrylate (ASA), methyl methacrylate-acrylonitrile-butadienestyrene (MABS), and acrylonitrile-ethylene-propylene-diene-styrene (AES). When present, impact modifiers can be present in the thermoplastic composition in amounts of 1 to 10 weight percent, specifically 1 to 8 weight percent, based on the total weight of polycarbonate component, polysiloxane-polycarbonate, impact modifier, and filler.

As indicated above, various additives known to those of skill in the art can be added to these compositions, and mixtures of additives can be used to convey added properties to an article prepared therefrom. Such additives include fillers, reinforcing agents, pigments, antioxidants, heat and color stabilizers, light stabilizers, and the like. Additives can be added at a suitable time during the mixing of the components for forming the composition. The additives are selected so as not to adversely affect the desired properties of the thermoplastic composition.

The fillers can include low-aspect ratio fillers, fibrous fillers, and polymeric fillers. Non-limiting examples of fillers include silica powder, such as fused silica, crystalline silica, natural silica sand, and various silane-coated silicas; boron-nitride powder and boron-silicate powders; alumina and magnesium oxide (or magnesia); wollastonite including surface-treated wollastonite; calcium sulfate (as, for example, its anhydride, dihydrate or trihydrate); calcium carbonates including chalk, limestone, marble and synthetic, precipitated calcium carbonates, generally in the form of a ground particulate which often comprises at least 98 weight percent CaCO₃ with the remainder being other inorganics such as magnesium carbonate, iron oxide and alumino-silicates; surface-treated calcium carbonates; talc, including fibrous, modular, needle shaped, and lamellar talcs; glass spheres, both hollow and solid, and surface-treated glass spheres having coupling agents such as silane coupling agents and/or containing a conductive coating; kaolin, including hard, soft, calcined kaolin, and kaolin comprising various coatings which can facilitate dispersion in and compatibility with the thermoset resin; mica, including metallized mica and mica surface treated with aminosilanes or acryloylsilanes coatings to impart good physical properties to compounded blends; feldspar and nepheline syenite; silicate spheres; flue dust; cenospheres; fillite; aluminosilicate (armospheres), including silanized and metallized aluminosilicate; quartz; quartzite; perlite; diatomaceous earth; silicon carbide; molybdenum sulfide; zinc sulfide; aluminum silicate (mullite); synthetic calcium silicate; zirconium silicate; barium titanate; barium fenite; barium sulfate and heavy spar; particulate or fibrous aluminum, bronze, zinc, copper and nickel; carbon black, including conductive carbon black; graphite, such as graphite powder; flaked fillers and reinforcements such as glass flakes, flaked silicon carbide, aluminum diboride, aluminum flakes, and steel flakes; processed inorganic fibers such as those derived from blends comprising at least one of aluminum silicates, aluminum oxides, magnesium oxides, and calcium sulfate hemihydrate; natural fibers including wood flour, cellulose, cotton, sisal, jute, starch, cork flour, lignin, ground nut shells, corn, rice grain husks; synthetic reinforcing fibers, including polyester fibers such as polyethylene terephthalate fibers, polyvinylalcohol fibers, aromatic polyamide fibers, polybenzimidazole fibers, polyimide fibers, polyphenylene sulfide fibers, polyether ether ketone fibers, boron fibers, ceramic fibers such as silicon carbide, fibers from mixed oxides of aluminum, boron and silicon; single crystal fibers or "whiskers" including silicon carbide fibers, alumina fibers, boron carbide fibers, iron fibers, nickel fibers, copper fibers; glass fibers, including textile glass fibers such as E, A, C, ECR, R, S, D, and NE glasses, and quartz; vapor-grown carbon fibers include those having an average diameter of 3.5 to 500 nanometers.

Fillers and reinforcing agents can be coated with a layer of metallic material to facilitate conductivity, or treated with silanes, e.g., to improve adhesion and/or dispersion with the polymeric matrix resin. Such silane-treated mineral fillers are known in the art. See, for example, U.S. Patent nos. 4,357,271, which teaches that silane-treated filler can comprise 0.5% to 2% of the filler, by weight. See also, U.S. Patent nos. 5,571,851 and 4,740,538. A variety of such fillers are commercially available, for example, Huber Engineered Materials offers amino silane treated kaolin clay under the designation NULOK™ 390, mercaptosilane treated kaolin clays (available in several different grades) under the designation NUCAP™, silane treated alumina trihydrate under the designation HYMOD^{™}, and surface treated magnesium hydroxide, under the designation ZEROGEN^{™}; Engelhard Corporation offers surface treated kaolin clays from under the trade designation TRANSLINK^{®} 390; Specialty Minerals, Inc. offers silane treated talc under the trade designations 9102-S^{™} and 9103-S^{™}; Luzenac Group offers silane-treated talc under the designation MISTRON^{®} talc; and Kobo Products Inc. offers various silane treated iron oxides, titanium dioxide, mica and talc.

In addition, the reinforcing fillers can be provided in the form of monofilament or multifilament fibers and can be used either alone or in combination with other types of fiber, through, for example, co-weaving or core/sheath, side-by-side, orange-type or matrix and fibril constructions, or by other methods known to one skilled in the art of fiber manufacture. Exemplary cowoven structures include, for example, glass fiber-carbon fiber, carbon fiber-aromatic polyimide (aramid) fiber, and aromatic polyimide fiberglass fiber or the like. Fibrous fillers can be supplied in the form of, for example, rovings, woven fibrous reinforcements, such as 0-90 degree fabrics or the like; non-woven fibrous reinforcements such as continuous strand mat, chopped strand mat, tissues, papers and felts or the like; or three-dimensional reinforcements such as braids. Filler can be used in amounts of 0 parts by weight to 40 parts by weight, based on 100 parts by weight of the polycarbonate resin and the impact modifier composition.

The fillers can be surface treated with silanes to improve adhesion, dispersion, and/or optical properties with the polymeric matrix resin. Filler is used in the thermoplastic composition in an amount of 1 to 25 parts by weight, specifically 2 to 10 parts by weight, and more specifically 3 to 5 parts by weight, per 100 parts by weight of polycarbonate, polysiloxane-polycarbonate, impact modifier composition, and filler. In an exemplary embodiment, the filler is talc.

Flame retardants often used with polycarbonate compositions can be included in, or excluded from, the compositions described herein. Such flame retardants can be organic compounds that include phosphorus, bromine, and/or chlorine. However, the polycarbonate-polysiloxane copolymers described above can be used in any case, and are not included among the flame retardants that might be excluded from the compositions described herein.

Among the flame retardants that might be included in other embodiments of compositions described herein are organic phosphate compounds such as an aromatic phosphate of the formula (GO)₃P=O, wherein each G is independently an alkyl, cycloalkyl, aryl, alkaryl, or aralkyl group, provided that at least one G is an aromatic group. Two of the G groups can be joined together to provide a cyclic group, for example, diphenyl pentaerythritol diphosphate, which is described by Axelrod in U.S. Pat. No. 4,154,775. Other aromatic phosphate flame retardants include, for example, phenyl bis(dodecyl) phosphate, phenyl bis(neopentyl) phosphate, phenyl bis(3,5,5'-trimethylhexyl) phosphate, ethyl diphenyl phosphate, 2-ethylhexyl di(p-tolyl) phosphate, bis(2-ethylhexyl) p-tolyl phosphate, tritolyl phosphate, bis(2-ethylhexyl) phenyl phosphate, tri(nonylphenyl) phosphate, bis(dodecyl) p-tolyl phosphate, dibutyl phenyl phosphate, 2-chloroethyl diphenyl phosphate, p-tolyl bis(2,5,5'-trimethylhexyl) phosphate, 2-ethylhexyl diphenyl phosphate, or the like. A specific aromatic phosphate is one in which each G is aromatic, for example, triphenyl phosphate, tricresyl phosphate, isopropylated triphenyl phosphate, and the like, or a combination of at least one of the foregoing compounds.

Di- or polyfunctional aromatic phosphorus-containing compounds can also be used as flame retardants, including compounds of the formulas (20)-(22): 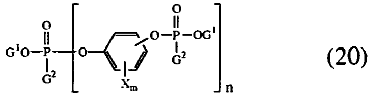 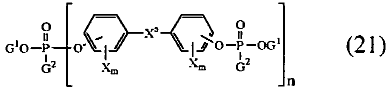 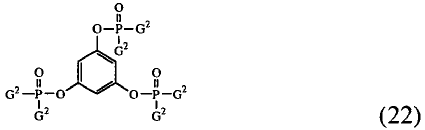 wherein each G¹ is independently a hydrocarbon having 1 carbon atom to 30 carbon atoms; each G² is independently a hydrocarbon or hydrocarbonoxy having 1 carbon atom to 30 carbon atoms; each X is independently a bromine or chlorine; m is 0 to 4, and n is 1 to 30. Exemplary di- or polyfunctional aromatic phosphorus-containing compounds include resorcinol tetraphenyl diphosphate (RDP), the bis(diphenyl) phosphate of hydroquinone and the bis(diphenyl) phosphate of bisphenol-A, respectively, their oligomeric and polymeric counterparts, and the like, or a combination of at least one of the foregoing compounds.

Other such flame retardant compounds containing phosphorus-nitrogen bonds include phosphonitrilic chloride, phosphoric acid amides, phosphonic acid amides, phosphinic acid amides, tris(aziridinyl) phosphine oxide. When present, phosphorus-containing flame retardants are generally present in amounts of 1 part by weight to 20 parts by weight, based on 100 parts by weight of polycarbonate component, polysiloxane-polycarbonate, impact modifier, and filler.

Halogenated materials can also be used as flame retardants, for example halogenated compounds and resins of the formula (23): 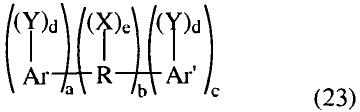 wherein R is an alkylene, alkylidene or cycloaliphatic linkage, e.g., methylene, propylene, isopropylidene, cyclohexylene, cyclopentylidene, or the like; an oxygen ether, carbonyl, amine, or a sulfur containing linkage, e.g., sulfide, sulfoxide, sulfone, or the like; or two or more alkylene or alkylidene linkages connected by such groups as aromatic, amino, ether, carbonyl, sulfide, sulfoxide, sulfone, or the like groups; Ar and Ar' are each independently a mono- or polycarbocyclic aromatic group such as phenylene, biphenylene, terphenylene, naphthylene, or the like, wherein hydroxyl and Y substituents on Ar and Ar' can be varied in the ortho, meta or para positions on the aromatic rings and the groups can be in any possible geometric relationship with respect to one another; each Y is independently an organic, inorganic or organometallic radical, for example (1) a halogen such as chlorine, bromine, iodine, or fluorine, (2) an ether group of the general formula -OE, wherein E is a monovalent hydrocarbon radical similar to X, (3) monovalent hydrocarbon groups of the type represented by R or (4) other substituents, e.g., nitro, cyano, and the like, said substituents being substantially inert provided there be at least one and specifically two halogen atoms per aryl nucleus; each X is independently a monovalent C₁₋₁₈ hydrocarbon group such as methyl, propyl, isopropyl, decyl, phenyl, naphthyl, biphenyl, xylyl, tolyl, benzyl, ethylphenyl, cyclopentyl, cyclohexyl, or the like, each optionally containing inert substituents; each d is independently 1 to a maximum equivalent to the number of replaceable hydrogens substituted on the aromatic rings comprising Ar or Ar'; each e is independently 0 to a maximum equivalent to the number of replaceable hydrogens on R; and each a, b, and c is independently a whole number, including 0, with the proviso that when b is 0, either a or c, but not both, can be 0, and when b is not 0, neither a nor c can be 0.

Included within the scope of the above formula are bisphenols of which the following are representative: bis(2,6-dibromophenyl)methane; 1,1-bis-(4-iodophenyl)ethane; 2,6-bis(4,6-dichloronaphthyl)propane; 2,2-bis(2,6-dichlorophenyl)pentane; bis(4-hydroxy-2,6-dichloro-3-methoxyphenyl)methane; and 2,2-bis(3-bromo-4-hydroxyphenyl)propane. Also included within the above structural formula are 1,3-dichlorobenzene, 1,4-dibrombenzene, and biphenyls such as 2,2'-dichlorobiphenyl, polybrominated 1,4-diphenoxybenzene, 2,4'-dibromobiphenyl, 2,4'-dichlorobiphenyl, as well as decabromo diphenyl oxide, and the like. Also useful are oligomeric and polymeric halogenated aromatic compounds, such as a copolycarbonate of bisphenol A and tetrabromobisphenol A and a carbonate precursor, e.g., phosgene. Metal synergists, e.g., antimony oxide, can also be used with the flame retardant. When present, halogen containing flame retardants are generally used in amounts of 1 part by weight to 50 parts by weight, based on 100 parts by weight of polycarbonate component, polysiloxane-polycarbonate, impact modifier, and filler.

Exemplary flame retardants include bisphenol A bis(diphenylphosphate) ester.

Inorganic flame retardants are also known, for example, salts of C₁₋₁₆ alkyl sulfonates such as potassium perfluorobutane sulfonate (Rimar salt), potassium perfluorooctane sulfonate, tetraethylammonium perfluorohexane sulfonate, and potassium diphenylsulfone sulfonate; salts such as CaCO₃, BaCO₃, and BaCO₃; salts of fluoro-anion complexes such as Li₃AlF₆, BaSiF₆, KBF₄, K₃AlF₆, KAlF₄, K₂SiF₆, and Na₃AlF₆; and the like. When present, inorganic flame retardant salts are generally present in amounts of 0.01 parts by weight to 25 parts by weight, more specifically 0.1 parts by weight to 10 parts by weight, based on 100 parts by weight of polycarbonate component, polysiloxane-polycarbonate, impact modifier, and filler.

Anti-drip agents can also be used, for example a fibril forming or non-fibril forming fluoropolymer such as polytetrafluoroethylene (PTFE). The anti-drip agent can be encapsulated by a rigid copolymer as described above, for example SAN. PTFE encapsulated in SAN is known as TSAN. Encapsulated fluoropolymers can be made by polymerizing the encapsulating polymer in the presence of the fluoropolymer, for example an aqueous dispersion. TSAN can provide significant advantages over PTFE, in that TSAN can be more readily dispersed in the composition. An exemplary TSAN can comprise, for example, 50 wt.% PTFE and 50 wt.% SAN, based on the total weight of the encapsulated fluoropolymer. The SAN can comprise, for example, 75 wt.% styrene and 25 wt.% acrylonitrile based on the total weight of the copolymer. Alternatively, the fluoropolymer can be pre-blended in some manner with a second polymer, such as for, example, an aromatic polycarbonate resin or SAN to form an agglomerated material for use as an anti-drip agent. Either method can be used to produce an encapsulated fluoropolymer. Antidrip agents are generally used in amounts of 0.1 part by weight to 1.5 parts by weight, based on 100 parts by weight of polycarbonate component, polysiloxane-polycarbonate, impact modifier, and filler.

Unexpectedly, it has been discovered that when talc with an average particle size D₅₀ of less than 2.7 micrometers (µm) is used as a filler in a thermoplastic composition, articles made with the thermoplastic composition provide a good overall balance of desirable physical properties, such as impact strength and flexural modulus, while also providing acceptable surface appearance. In one embodiment, another filler can be present in the composition, provided that the additional filler(s) do not significantly adversely affect the desired properties of the composition, in particular impact strength and flexural modulus. In a specific embodiment, the talc is the only filler in the composition. In another embodiment, a fibrous reinforcing filler is present in the composition in addition to the talc, but no other particulate filler.

In an embodiment, the talc has an average particle size (D₅₀) of less than 2.7 micrometers, specifically less than or equal to 2.5 micrometers, more specifically less than or equal to 2.0 micrometers, and still more specifically less than or equal to 1.0 micrometer. In another embodiment, the talc has an average particle size D₅₀ of greater than or equal to 0.001 micrometers, specifically greater than or equal to 0.01 micrometers, and more specifically greater than or equal to 0.1 micrometers. The distribution of particle diameters can be unimodal, bimodal, or multimodal. In still another embodiment, when one or more additional fillers are present in the composition, each of the additional fillers has an average particle size D₅₀ of 0.001 to less than 2.7 micrometers, specifically 0.01 to 2.5 micrometers, more specifically 0.01 to 2.0 micrometers, and still more specifically 0.1 to 1.0 micrometer. Average particle size, as used herein, means the average of the largest dimension for the particle, and can be determined by a particle size determination method such as sedimentation.

The compositions described herein can comprise a primary antioxidant or "stabilizer" (e.g., a hindered phenol and/or secondary aryl amine) and, optionally, a secondary antioxidant (e.g., a phosphate and/or thioester). Specifically, the antioxidant is one that does not promote hydrolysis. For example, exemplary stabilizers include those that become inactive, or change form, after hydrolytic aging, whereas stabilizers that generate degradation catalysts after hydrolytic exposure are not suitable. Examples of unsuitable stabilizers would be phosphites that generate acidic species upon hydrolysis in a PC/ABS blend. Exemplary antioxidant additives include, for example, alkylated monophenols or polyphenols; alkylated reaction products of polyphenols with dienes, such as tetrakis[methylene(3,5-di-tert-butyl-4-hydroxyhydrocinnamate)] methane, or the like; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; or the like; or combinations comprising at least one of the foregoing antioxidants. Antioxidants are generally used in amounts of 0.01 parts by weight to 1 part by weight, specifically 0.1 parts by weight to 0.5 parts by weight, based on 100 parts by weight of polycarbonate, polysiloxane-polycarbonate, impact modifier, and filler.

Exemplary heat and color stabilizer additives include, for example, organophosphites such as tris(2,4-di-tert-butyl phenyl) phosphite. Heat and color stabilizers are generally used in amounts of 0.01 parts by weight to 5 parts by weight, specifically 0.05 parts by weight to 0.3 parts by weight, based on 100 parts by weight of polycarbonate, polysiloxane-polycarbonate, impact modifier, and filler.

Exemplary secondary heat stabilizer (antioxidant) additives include, for example thioethers and dithioesters such as pentaerythritol tetrakis (3-(dodecylthio)propionate), pentaerythritol tetrakis[3-(3,5-di-tert-butyl-4-hydroxyphenyl)propionate], dilauryl thiodipropionate, distearyl thiodipropionate, dimyristyl thiodipropionate, ditridecyl thiodipropionate, penterythritol octylthiopropionate, dioctadecyl disulphide, or the like, or combinations comprising at least one of the foregoing heat stabilizers. Secondary stabilizers are generally used in amount of 0.01 parts by weight to 5 parts by weight, specifically 0.03 parts by weight to 0.3 parts by weight, based upon 100 parts by weight of polycarbonate, polysiloxane-polycarbonate, impact modifier, and filler.

Light stabilizers, including ultraviolet light (UV) absorbing additives, can also be used. Exemplary stabilizing additives of this type include, for example, benzotriazoles and hydroxybenzotriazoles such as 2-(2-hydroxy-5-methylphenyl)benzotriazole, 2-(2-hydroxy-5-tert-octylphenyl)-benzotriazole, 2-(2H-benzotriazol-2-yl)-4-(1,1,3,3-tetramethylbutyl)-phenol (CYASORB® 5411 stabilizer from Cytec), and TINUVIN® 234 stabilizers from Ciba Specialty Chemicals; hydroxybenzotriazines; hydroxyphenyl-triazine or - pyrimidine UV absorbers such as TINUVIN® 1577 stabilizer (Ciba), and 2-[4,6-bis(2,4-dimethylphenyl)-1,3,5-triazin-2-yl]-5-(octyloxy)-phenol (CYASORB® 1164 stabilizer from Cytec); non-basic hindered amine light stabilizers (hereinafter "HALS"), including substituted piperidine moieties and oligomers thereof, for example 4-piperidinol derivatives such as TINUVIN® 622 stabilizer (Ciba), GR-3034, TINUVIN® 123 stabilizer, and TINUVIN® 440 stabilizer; benzoxazinones, such as 2,2'-(1,4-phenylene)bis(4H-3,1-benzoxazin-4-one) (CYASORB® UV-3638 stabilizer); hydroxybenzophenones such as 2-hydroxy-4-n-octyloxybenzophenone (CYASORB® 531 stabilizer); oxanilides; cyanoacrylates such as 1,3-bis[(2-cyano-3,3-diphenylacryloyl)oxy]-2,2-bis[[(2-cyano-3,3-diphenylacryloyl)oxy]methyl]propane (UVINUL® 3030 stabilizer) and 1,3-bis[(2-cyano-3,3-diphenylacryloyl)oxy] -2,2-bis[[(2-cyano-3,3-diphenylacryloyl)oxy]methyl]propane; and nano-size inorganic materials such as titanium oxide, cerium oxide, and zinc oxide, all with particle size less than 100 nanometers; and the like, and combinations comprising at least one of the foregoing stabilizers. Light stabilizers can be used in amounts of 0.01 parts by weight to 10 parts by weight, specifically 0.1 parts by weight to 1 parts by weight, based on 100 parts by weight of polycarbonate component, polysiloxane-polycarbonate, impact modifier, and filler. UV absorbers are generally used in amounts of 0.1 parts by weight to 5 parts by weight, based on 100 parts by weight of the polycarbonate component, polysiloxane-polycarbonate, impact modifier, and filler.

Plasticizers, lubricants, and/or mold release agents additives can also be used. There is considerable overlap among these types of materials, which include, for example, phthalic acid esters such as dioctyl-4,5-epoxy-hexahydrophthalate; tris-(octoxycarbonylethyl)isocyanurate; tristearin; di- or polyfunctional aromatic phosphates such as resorcinol tetraphenyl diphosphate (RDP), the bis(diphenyl) phosphate of hydroquinone and the bis(diphenyl) phosphate of bisphenol-A; poly-alpha-olefins; epoxidized soybean oil; silicones, including silicone oils; esters, for example, fatty acid esters such as alkyl stearyl esters, e.g., methyl stearate; stearyl stearate, pentaerythritol tetrastearate, and the like; mixtures of methyl stearate and hydrophilic and hydrophobic nonionic surfactants comprising polyethylene glycol polymers, polypropylene glycol polymers, and copolymers thereof, e.g., methyl stearate and polyethylene-polypropylene glycol copolymers in a suitable solvent; waxes such as beeswax, montan wax, paraffin wax or the like; and poly alpha olefins such as Ethylflo™ 164, 166, 168, and 170. Such materials are generally used in amounts of 0.1 parts by weight to 20 parts by weight, specifically 1 part by weight to 10 parts by weight, based on 100 parts by weight of the polycarbonate component, polysiloxane-polycarbonate, impact modifier, and filler.

Colorants such as pigment and/or dye additives can also be present. Useful pigments can include, for example, inorganic pigments such as metal oxides and mixed metal oxides such as zinc oxide, titanium dioxides, iron oxides, or the like; sulfides such as zinc sulfides, or the like; aluminates; sodium sulfo-silicates sulfates, chromates, or the like; carbon blacks; zinc ferrites; ultramarine blue; organic pigments such as azos, di-azos, quinacridones, perylenes, naphthalene tetracarboxylic acids, flavanthrones, isoindolinones, tetrachloroisoindolinones, anthraquinones, enthrones, dioxazines, phthalocyanines, and azo lakes; Pigment Red 101, Pigment Red 122, Pigment Red 149, Pigment Red 177, Pigment Red 179, Pigment Red 202, Pigment Violet 29, Pigment Blue 15, Pigment Blue 60, Pigment Green 7, Pigment Yellow 119, Pigment Yellow 147, Pigment Yellow 150, and Pigment Brown 24; or combinations comprising at least one of the foregoing pigments. Pigments are generally used in amounts of 0.01 to 10 parts by weight, based on 100 parts by weight of polycarbonate component, polysiloxane-polycarbonate, impact modifier, and filler.

Exemplary dyes are generally organic materials and include, for example, coumarin dyes such as coumarin 460 (blue), coumarin 6 (green), nile red or the like; lanthanide complexes; hydrocarbon and substituted hydrocarbon dyes; polycyclic aromatic hydrocarbon dyes; scintillation dyes such as oxazole or oxadiazole dyes; aryl- or heteroaryl-substituted poly (C₂₋₈) olefin dyes; carbocyanine dyes; indanthrone dyes; phthalocyanine dyes; oxazine dyes; carbostyryl dyes; napthalenetetracarboxylic acid dyes; porphyrin dyes; bis(styryl)biphenyl dyes; acridine dyes; anthraquinone dyes; cyanine dyes; methine dyes; arylmethane dyes; azo dyes; indigoid dyes, thioindigoid dyes, diazonium dyes; nitro dyes; quinone imine dyes; aminoketone dyes; tetrazolium dyes; thiazole dyes; perylene dyes, perinone dyes; bis-benzoxazolylthiophene (BBOT); triarylmethane dyes; xanthene dyes; thioxanthene dyes; naphthalimide dyes; lactone dyes; fluorophores such as anti-stokes shift dyes which absorb in the near infrared wavelength and emit in the visible wavelength, or the like; luminescent dyes such as 7-amino-4-methylcoumarin; 3-(2'-benzothiazolyl)-7-diethylaminocoumarin; 2-(4-biphenylyl)-5-(4-t-butylphenyl)-1,3,4-oxadiazole; 2,5-bis-(4-biphenylyl)-oxazole; 2,2'-dimethyl-p-quaterphenyl; 2,2-dimethyl-p-terphenyl; 3,5,3"",5""-tetra-t-butyl-p-quinquephenyl; 2,5-diphenylfuran; 2,5-diphenyloxazole; 4,4'-diphenylstilbene; 4-dicyanomethylene-2-methyl-6-(p-dimethylaminostyryl)-4H-pyran; 1,1'-diethyl-2,2'-carbocyanine iodide; 3,3'-diethyl-4,4',5,5'-dibenzothiatricarbocyanine iodide; 7-dimethylamino-1-methyl-4-methoxy-8-azaquinolone-2; 7-dimethylamino-4-methylquinolone-2; 2-(4-(4-dimethylaminophenyl)-1,3-butadienyl)-3-ethylbenzothiazolium perchlorate; 3-diethylamino-7-diethyliminophenoxazonium perchlorate; 2-(1-naphthyl)-5-phenyloxazole; 2,2'-p-phenylen-bis(5-phenyloxazole); rhodamine 700; rhodamine 800; pyrene, chrysene, rubrene, coronene, or the like; or combinations comprising at least one of the foregoing dyes. Dyes are generally used in amounts of 0.01 to 10 parts by weight, based on 100 parts by weight of polycarbonate component, polysiloxane-polycarbonate, impact modifier, and filler.

Monomeric, oligomeric, or polymeric antistatic additives that can be sprayed onto the article or processed into the thermoplastic composition can be advantageously used. Examples of monomeric antistatic agents include long chain esters such as glycerol monostearate, glycerol distearate, glycerol tristearate, and the like, sorbitan esters, and ethoxylated alcohols, alkyl sulfates, alkylarylsulfates, alkylphosphates, alkylaminesulfates, alkyl sulfonate salts such as sodium stearyl sulfonate, sodium dodecylbenzenesulfonate and the like, fluorinated alkylsulfonate salts, betaines, and the like. Combinations of the foregoing antistatic agents can be used. Exemplary polymeric antistatic agents include certain polyetheresters, each containing polyalkylene glycol moieties such as polyethylene glycol, polypropylene glycol, polytetramethylene glycol, and the like. Such polymeric antistatic agents are commercially available, and include, for example PELESTAT® 6321 antistatic agent (Sanyo), PEBAX® MH1657 polymer (Atofina), and IRGASTAT® P18 and P22 antistatic agents (Ciba-Geigy). Other polymeric materials that can be used as antistatic agents are inherently conducting polymers such as polythiophene (commercially available from Bayer), which retains some of its intrinsic conductivity after melt processing at elevated temperatures. In one embodiment, carbon fibers, carbon nanofibers, carbon nanotubes, carbon black or any combination of the foregoing can be used in a polymeric resin containing chemical antistatic agents to render the composition electrostatically dissipative. Antistatic agents are generally used in amounts of 0.1 part by weight to 10 parts by weight, based on 100 parts by weight of the polycarbonate component, polysiloxane-polycarbonate, impact modifier, and filler.

Where a foam is desired, exemplary blowing agents include, for example, low boiling halohydrocarbons and those that generate carbon dioxide; blowing agents that are solid at room temperature and when heated to temperatures higher than their decomposition temperature, generate gases such as nitrogen, carbon dioxide, ammonia gas, such as azodicarbonamide, metal salts of azodicarbonamide, 4,4'-oxybis(benzenesulfonylhydrazide), sodium bicarbonate, ammonium carbonate, or the like, or combinations comprising at least one of the foregoing blowing agents. Blowing agents are generally used in amounts of 0.5 part by weight to 20 parts by weight, based on 100 parts by weight of polycarbonate component, polysiloxane-polycarbonate, impact modifier, and filler.

In an embodiment, the composition consists essentially of the polycarbonate, the polycarbonate-polysiloxane copolymer, the optiimpact modifier and the filler, to the exclusion of any ingredients that defeat the improved surface appearance balance of the compositions demonstrated in the Examples herein. In another embodiment, the composition consists of the polycarbonate, the polycarbonate-polysiloxane copolymer, the impact modifier and the filler, mold release agent, stabilizers (thermal and UV), mold release agent, and optional colorants.

The thermoplastic compositions can be manufactured by methods generally available in the art, for example, in one embodiment, in one manner of proceeding, powdered polycarbonate, polycarbonate-polysiloxane copolymer, impact modifier, and any other optional components are first blended, optionally with chopped glass strands or other fillers in a HENSCHEL-mixer® high speed mixer. Other low shear processes including but not limited to hand mixing can also accomplish this blending. The blend is then fed into the throat of a twin-screw extruder via a hopper. Alternatively, one or more of the components can be incorporated into the composition by feeding directly into the extruder at the throat and/or downstream through a sidestuffer. Such additives can also be compounded into a masterbatch with a desired polymeric resin and fed into the extruder. The additives can be added to either the polycarbonate base materials or the impact modifier to make a concentrate, before this is added to the final product. The extruder is generally operated at a temperature higher than that necessary to cause the composition to flow, specifically 500°F (260°C) to 650°F (343°C), more specifically 500°F (260°C) to 575°F (300°C), e.g., 525°F (275°C) to 550°F (288°C). The extrudate is immediately quenched in a water batch and pelletized. The pellets, prepared by cutting the extrudate, can be one-fourth inch long or less as desired. Such pellets can be used for subsequent molding, shaping, or forming into a variety of useful articles by processes known in the art for the manufacture of articles from thermoplastic compositions.

The appearance of an article prepared using the thermoplastic composition can be assessed qualitatively by visual appearance either subjectively, based purely on aesthetics, or by objective comparison to a master standard having acceptable appearance. The comparison can be conducted using the naked eye under a set of lights selected for optimum viewing, wherein the optimal lighting conditions may be selected for optimum viewing of the article, and at a selected distance between the viewer and the film, typically 30 to 150 centimeters. A determination of the appearance of the article for streaks, blemishes, surface finish, color uniformity, textural uniformity, and the like, can thus be made.

In an embodiment, an article made with the thermoplastic composition has good visual appearance and is substantially free or free of visual defects when viewed at a distance of 0.1 meter to 1 meter.

In an embodiment, an article made from the thermoplastic composition has a haze of less than 30% when measured according to ASTM D 1003-00 at a thickness of 3.2 millimeters.

The thermoplastic compositions can further have a Notched IZOD Impact of greater than 15 kilograms centimeters per centimeter (Kg/cm/cm), specifically 45 to 80 kilograms centimeters per centimeter, measured at 23°C using 1/8-inch thick bars (3.18 mm) in accordance with ASTM D256-04.

The thermoplastic compositions described herein can be shaped, formed, or molded into a variety of articles. The thermoplastic compositions can be molded into useful shaped articles by a variety of means such as injection molding, extrusion, rotational molding, blow molding and thermoforming to form articles.

Shaped, formed, or molded articles comprising the polycarbonate compositions are also provided. The polycarbonate compositions can be molded into useful shaped articles by a variety of means such as injection molding, extrusion, rotational molding, blow molding and thermoforming to form articles such as, for example, computer and business machine housings such as housings for monitors, handheld electronic device housings such as housings for cell phones, electrical connectors, and components of lighting fixtures, ornaments, home appliances, roofs, greenhouses, sun rooms, swimming pool enclosures, and the like. The thermoplastic composition can be used in automotive applications, for example as instrument panels, overhead consoles, interior trim, center consoles, and the like. Compositions as described herein have advantageous physical properties such as good impact resistance, low coefficient of thermal expansion, and low temperature ductility.

The thermoplastic composition is further illustrated by the following non-limiting examples.

### EXAMPLES

All thermoplastic compositions were compounded on a Werner & Pfleiderer co-rotating twin screw extruder (Length/Diameter (L/D) ratio = 30/1, vacuum port located near die face). The twin-screw extruder had enough distributive and dispersive mixing elements to produce good mixing of the polymer compositions. The compositions were subsequently molded according to ISO 294 on a Husky or BOY injection-molding machine. Compositions were compounded and molded at a temperature of 250 to 330°C, though it will be recognized by one skilled in the art that the method is not limited to these temperatures.

Thermoplastic compositions for the examples and comparative examples were prepared using the components shown in Table 1. The components were blended in a powder mixer, extruded on a twin-screw extruder, and injection molded into flat, rectangular plaques of 3.2 mm thickness, using the equipment described above.

**Table 1.**

| Component | Description | Source |
|---|---|---|
| Polycarbonate (PC) | BPA polycarbonate resin with an MVR at 300°C/1.2 kg of 21.9-31.8 g/10 min. and an Mw of 20,000 to 25,000 g/mol. | GE Plastics |
| Polycarbonate-polysiloxane copolymer (PC-PDMS copolymer(1) (6 wt.% siloxane) | Polycarbonate-polysiloxane copolymer bisphenol A/eugenol linked polydimethylsiloxane copolymer, with an average siloxane block length E of 50 siloxane repeating units and the copolymer has an absolute weight average molecular weight of 23,000 g/mol. | GE Plastics |
| Polycarbonate-polysiloxane copolymer (PC-PDMS copolymer (2) (20% wt.% siloxane) | Polycarbonate-polysiloxane copolymer (Bisphenol A/eugenol linked polydimethylsiloxane copolymer, with an average siloxane block length E of 50 repeating units and an absolute weight average molecular weight of 30,000 g/mol. | GE Plastics |
| Impact modifier (ABS) | Rubber graft emulsion polymer comprising 50% butadiene, 25% styrene-acrylonitrile grafted thereon and 25% free styrene-acrylonitrile copolymer. | GE Plastics |
| TSAN | Polytetrafluoroethylene (PTFE) encapsulated styrene-acrylonitrile copolymer (SAN) (Anti-drip agent) | GE Plastics |
| Flame Retardant (BPADP) | Bisphenol A bis(diphenylphosphate) ester | Asahidenka |
| Talc (1), (D₅₀ = 1.0 micrometer) | Particle size distribution with D₅₀ of 1.0 micrometer; Trade name JETFINE® 3CA) | Luzenac |
| Talc (2), (D₅₀ = 2.7 micrometer) | Particle size distribution with D₅₀ of 2.7 micrometer; Trade name HST05 | Hayashi chemical |

Flammability tests were performed following the procedure of Underwriter's Laboratory Bulletin 94 entitled "Tests for Flammability of Plastic Materials, UL94." Several ratings can be applied based on the rate of burning, time to extinguish, ability to resist dripping, and whether or not drips are burning. According to this procedure, materials can be classified as HB, V0, V1, V2, VA and/or VB on the basis of the test results obtained for five samples. The criteria for each of these flammability classifications are described below.

5VB: a flame is applied to a vertically fastened, 5-inch (127 mm) by 0.5-inch (12.7 mm) test bar of a given thickness above a dry, absorbent cotton pad located 12 inches (305 mm) below the bar. The thickness of the test bar is determined by calipers with 0.1 mm accuracy. The flame is a 5-inch (127 mm) flame with an inner blue cone of 1.58 inches (40 mm). The flame is applied to the test bar for 5 seconds so that the tip of the blue cone touches the lower corner of the specimen. The flame is then removed for 5 seconds. Application and removal of the flame is repeated for until the specimen has had five applications of the same flame. After the fifth application of the flame is removed, a timer (T-0) is started and the time that the specimen continues to flame (after-flame time), as well as any time the specimen continues to glow after the after-flame goes out (after-glow time), is measured by stopping T-0 when the after-flame stops, unless there is an after-glow and then T-0 is stopped when the after-glow stops. The combined after-flame and after-glow time must be less than or equal to 60 seconds after five applications of a flame to a test bar, and there can be no drips that ignite the cotton pad. The test is repeated on 5 identical bar specimens. If there is a single specimen of the five does not comply with the time and/or no-drip requirements then a second set of 5 specimens are tested in the same fashion. All of the specimens in the second set of 5 specimens must comply with the requirements in order for material in the given thickness to achieve the 5VB standard.

V0: In a sample placed so that its long axis is 180 degrees to the flame, the average period of flaming and/or smoldering after removing the igniting flame does not exceed five seconds and none of the vertically placed samples produces drips of burning particles that ignite absorbent cotton. Five bar flame out time (FOT) is the sum of the flame out time for five bars, each lit twice for a maximum flame out time of 50 seconds.

Izod Impact Strength (measured using ASTM D 256) ('NII) is used to compare the impact resistances of plastic materials. Flexural modulus was determined using a 6.4 mm thick molded tensile bar tested per ASTM D790.

Surface appearance was determined by observation from a distance between 0.01 and 1 meter to determine visual appearance. When the molded parts show streak mark on the surface, the parts fail surface appearance test.

A series of compositions were prepared as set forth in Table 2, using the materials described above. In addition to the listed components, each sample further contained 0.76 wt.% of a thermal stabilizer (phosphite) and a mold release agent (pentaerythritol tetrastearate) (combined). All amounts are in weight percent, unless indicated otherwise. In Table 2, "Ex" indicates an Example and "CEx" a Comparative Example.

The compositions of Table 2 were tested for Izod impact strength, flexural modulus, surface appearance, and flammability. Flammability was evaluated per Underwriters Laboratories test method UL 94. The sample was evaluated in two orientations. The details of these tests are known to those of ordinary skill in the art, as summarized above. The results for each sample is also set forth in Table 2.

**Table 2.**

| Material | Ex 1 | Ex 2 | CEx 1 | CEx 2 | CEx 3 | CEx 4 | CEx 5 | CEx 6 | Cox 7 | CEx 8 | CEx 9 | CEx 10 |
|---|---|---|---|---|---|---|---|---|---|---|---|---|
| Polycarbonate | 79.9 | 75.89 | 79.9 | 80.4 | 80.4 | 84.4 | 84.4 | 87.9 | 87.9 | 75.6 | 75.6 | 75.6 |
| Polycarbonate-6 wt.% PDMS | 8.0 | 12 | 0 | 8 | 0 | 8 | 0 | 0 | 0 | 0 | 12 | 0 |
| Polyearbonate-20 wt.% PDMS | 0 | 0 | 8 | 0 | 8.0 | 0 | 8.0 | 0 | 0 | 12 | 0 | 12 |
| Talc, D₅₀ = 1.0 micrometer | 4.5 | 4.5 | 4.5 | 0 | 0 | 0 | 0 | 4.5 | 0 | 4.5 | 0 | 0 |
| Talc. D₅₀ = 2.7 micrometer | 0 | 0 | 0 | 4.5 | 4.5 | 0 | 0 | 0 | 4.5 | 0 | 4.5 | 4.5 |
| BPADP | 3 | 3 | 3 | 3 | 3 | 3 | 3 | 3 | 3 | 3 | 3 | 3 |
| ABS | 3 | 3 | 3 | 3 | 3 | 3 | 3 | 3 | 3 | 3 | 3 | 3 |

| TSAN | 0.85 | 10.85 | 10.85 | 10.85 | 10.85 | 10.85 | 10.85 | 10.85 | 10.85 | 10.85 | 10.85 | 10.85 |
|---|---|---|---|---|---|---|---|---|---|---|---|---|
| NII (kg·cm/cm) | 45 | 55 | 65 | 15 | 50 | 70 | 80 | 10 | 7 | 70 | 25 | 65 |
| Flex modulus (kg/cm²) | 28000 | 28000 | 27800 | 28000 | 27600 | 24500 | 24500 | 28500 | 28500 | 28000 | 28000 | 28000 |
| Surface Appearance | Pass | Pass | Fail | Pass | Fail | Pass | Pass | Pass | Pass | Fail | Pass | Fail |
| Flammability UL 94 5VB (1.5 mm) | Pass | Pass | Pass | Pass | Pass | Fail | Fail | Fail | Fail | Pass | Pass | Pass |
| Flammability UL 94 V0 (1.5 mm) | Pass | Pass | Pass | Pass | Pass | Pass | Pass | Fail | Fail | Pass | Pass | Pass |

The data of Table 2 illustrates that the materials of Examples 1 and 2 provide a Notched Izod impact strength of at least 45 kg·cm/cm and a flexural modulus of 28000 kg/cm², while passing tests for surface appearance and flammability. The data of Table 2 also show that no material in the Comparative Examples passed the surface appearance and flammability tests while providing impact strength greater than 15 kg·cm/cm.

As is evident from the Examples and Comparative Examples, various embodiments of compositions described herein exhibit impact strength greater than 15 kg·cm/cm, flexural modulus of at least 28,000 kg/cm² while passing surface appearance and flammability tests. The exemplary embodiment with 12 wt.% of PC-PDMS copolymer (1) (6% siloxane content) provided a Notched Izod impact strength of 55 kg·cm/cm, flexural modulus of 28000 kg/cm², and passed surface appearance and flammability tests. The embodiment with 8 wt.% PC-PDMS copolymer (1) (6% siloxane content) provided a Notched Izod impact strength of 45 kg·cm/cm, flexural modulus of 28000 kg/cm², and passed surface appearance and flammability tests. The combination of a Notched Izod impact strength greater than 15 kg·cm/cm, a flexural modulus at least 28000 kg/cm² and passing surface appearance and UL 94 flammability tests is unique.

As used herein, the terms "first," "second," and the like do not denote any order or importance, but rather are used to distinguish one element from another. The singular forms "a," "an," and "the" include plural referents unless the context clearly dictates otherwise. The suffix "(s)" as used herein is intended to include both the singular and the plural of the term that it modifies, thereby including at least one of that term (e.g., the colorant(s) includes at least one colorants). As used herein, "combinations thereof" is inclusive of one or more of the recited elements, optionally together with a like element not recited. "Optional" or "optionally" means that the subsequently described event or circumstance can or cannot occur, and that the description includes instances where the event occurs and instances where it does not. Unless defined otherwise, technical and scientific terms used herein have the same meaning as is commonly understood by one of skill in the art to which this invention belongs.

Other than in the operating examples or where otherwise indicated, all numbers or expressions referring to quantities of ingredients, reaction conditions, and the like, used in the specification and claims are to be understood as modified in all instances by the term "about." Various numerical ranges are disclosed in this patent application. Because these ranges are continuous, they include every value between the minimum and maximum values. Unless expressly indicated otherwise, the various numerical ranges specified in this application are approximations. The endpoints of all ranges reciting the same characteristic or component are independently combinable and inclusive of the recited endpoint.

All molecular weights in this application refer to weight average molecular weights. All such mentioned molecular weights are expressed in Daltons unless otherwise specified. Compounds are described using standard nomenclature. As used herein, the term "(meth)acrylate" encompasses both acrylate and methacrylate groups. Any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

As used herein, the term "hydrocarbyl" refers to a straight or branched chain, substituted or unsubstituted hydrocarbon group including aromatic and/or aliphatic groups; the term "alkyl" refers to a straight or branched chain monovalent hydrocarbon group; "alkylene" refers to a straight or branched chain divalent hydrocarbon group; "alkylidene" refers to a straight or branched chain divalent hydrocarbon group, with both valences on a single common carbon atom; "alkenyl" refers to a straight or branched chain monovalent hydrocarbon group having at least two carbons joined by a carbon-carbon double bond; "cycloalkyl" refers to a non-aromatic monovalent monocyclic or multicylic hydrocarbon group having at least three carbon atoms, "cycloalkylene" refers to a non-aromatic alicyclic divalent hydrocarbon group having at least three carbon atoms, with at least one degree of unsaturation; "aryl" refers to an aromatic monovalent group containing only carbon in the aromatic ring or rings; "arylene" refers to an aromatic divalent group containing only carbon in the aromatic ring or rings; "alkylaryl" refers to an aryl group that has been substituted with an alkyl group as defined above, with 4-methylphenyl being an exemplary alkylaryl group; "arylalkyl" refers to an alkyl group that has been substituted with an aryl group as defined above, with benzyl being an exemplary arylalkyl group; "acyl" refers to a an alkyl group as defined above with the indicated number of carbon atoms attached through a carbonyl carbon bridge (-C(=O)-); "alkoxy" refers to an alkyl group as defined above with the indicated number of carbon atoms attached through an oxygen bridge (-O-); and "aryloxy" refers to an aryl group as defined above with the indicated number of carbon atoms attached through an oxygen bridge (-O-).

Unless otherwise indicated, each of the foregoing groups can be unsubstituted or substituted, provided that the substitution does not significantly adversely affect synthesis, stability, or use of the compound. The term "substituted" as used herein means that any one or more hydrogens on the designated atom or group are replaced with another group, provided that the designated atom's normal valence is not exceeded. When the substituent is oxo (i.e., =O), then two hydrogens on the atom are replaced. Combinations of substituents and/or variables are permissible provided that the substitutions do not significantly adversely affect synthesis or use of the compound. Exemplary groups that can be present on a "substituted" position include, but are not limited to, halogen; cyano; hydroxyl; nitro; azido; alkanoyl (such as a C₂-C₆ alkanoyl group such as acyl or the like); carboxamido; alkyl groups (which can have 1 to 8 carbon atoms, or more specifically 1 to 6 carbon atoms); cycloalkyl groups, alkenyl and alkynyl groups (including groups having at least one unsaturated linkages and from 2 to 8, or 2 to 6 carbon atoms); alkoxy groups having at least one oxygen linkage and from 1 to 8, or from 1 to 6 carbon atoms; aryloxy such as phenoxy; alkylthio groups including those having at least one thioether linkage and from 1 to 8 carbon atoms, or from 1 to 6 carbon atoms; alkylsulfinyl groups including those having at least one sulfinyl linkage and from 1 to 8 carbon atoms, or from 1 to 6 carbon atoms; alkylsulfonyl groups including those having at least one sulfonyl linkage and from 1 to 8 carbon atoms, or from 1 to 6 carbon atoms; aminoalkyl groups including groups having at least one N atom and from 1 to 8, or from 1 to 6 carbon atoms; aryl having 6 or more carbons and at least one ring, (e.g., phenyl, biphenyl, naphthyl, or the like, each ring either substituted or unsubstituted aromatic); arylalkyl having 1 to 3 separate or fused rings and from 6 to 18 ring carbon atoms, with benzyl being an exemplary arylalkyl group; or arylalkoxy having 1 to 3 separate or fused rings and from 6 to 18 ring carbon atoms, with benzyloxy being an exemplary arylalkoxy group.

All references are incorporated herein by reference.

While the invention has been described with reference to a specific embodiment, it will be understood by those skilled in the art that various changes can be made and equivalents can be substituted for elements thereof without departing from the scope of the invention. In addition, many modifications can be made to adapt a particular situation or material to the teachings of the invention without departing from essential scope thereof. Therefore, it is intended that the invention not be limited to the particular embodiment disclosed as the best mode contemplated for carrying out this invention, but that the invention will include all embodiments falling within the scope of the appended claims.

## Claims

1. A thermoplastic composition comprising:
55 to 97 weight percent of a polycarbonate;
1 to 20 weight percent of a polysiloxane-polycarbonate comprising siloxane units of the formula: 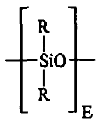 wherein each occurrence of R is the same or different, and is a C₁₋₃₀ monovalent organic group, wherein E is 1 to 1,000, and wherein the polysiloxane-polycarbonate comprises 0.1 weight percent to 15 weight percent siloxane units;
1 to 10 weight percent of an impact modifier; and
1 to 10 weight percent of a filler having an average particle size D₅₀ of less than 2.7 micrometers.

2. The thermoplastic composition of claim 1, wherein a sample prepared from the thermoplastic composition and having a thickness of less than 3 millimeters passes the UL 94 flammability 5VB test.

3. The thermoplastic composition of claims 1 or 2, wherein a sample prepared from the thermoplastic composition and having a thickness of 3 millimeters passes the UL 94 flammability V0 test.

4. The thermoplastic composition of any one of claims 1 to 3, wherein a sample molded from the thermoplastic composition has no visual defects when viewed at a distance from 0.1 to 1 meter.

5. The thermoplastic composition of any one of claims 1 to 4, wherein a sample comprising the thermoplastic composition has a flexural modulus greater than 25,000 kilograms per square centimeter when measured in accordance with ASTM D790.

6. The thermoplastic composition of any one of claims 1 to 5, wherein the siloxane units are of the formula 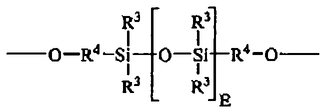 wherein each R³ is independently a C₁-C₁₂ hydrocarbyl, E has an average value of 1 to 1,000, and each occurrence of R⁴ is independently a divalent C₁-C₃₀ hydrocarbylene.

7. The thermoplastic composition of any one of claims to 6, wherein the siloxane units are of the formula 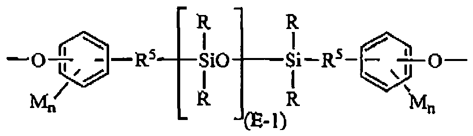 wherein each R is independently a C₁-C₁₂ hydrocarbyl, E has an average value of I to 1000, each R⁵ is independently a divalent C₂-C₈ aliphatic group, each M can be the same or different, and can be a halogen, cyano, nitro, C₁-C₈ alkylthio, C₁-C₈ alkyl, C₁-C₈ alkoxy, C₂-C₈ alkenyl, C₂-C₈ alkenyloxy group, C₃-C₈ cycloalkyl, C₃-C₈ cycloalkoxy, C₆-C₁₀ aryl, C₆-C₁₀ aryloxy, C₇-C₁₂ arylalkyl, C₇-C₁₂ arylalkoxy, C₇-C₁₂ alkylaryl, or C₇-C₁₂ alkylaryloxy, and each n is independently 0, 1, 2, 3, or 4.

8. The thermoplastic composition of any one of claims 1 to 7, further comprising a flame retardant, wherein the flame retardant comprises a phosphorous containing compound.

9. The thermoplastic composition of any one of claims 1 to 8, further comprising an antidrip agent, wherein the antidrip agent is present in an amount of 0.1 to 1.5 parts by weight, based on the weight of the polycarbonate, polysiloxane-polycarbonate, filler, and impact modifier.

10. The thermoplastic composition of any one of claims 1 to 9, wherein the siloxane content of the thermoplastic composition is less than or equal to 2 weight percent, based on the total weight of the composition.

11. The thermoplastic composition of any one of claims 1 to 10, wherein the filler is a mineral filler.

12. The thermoplastic composition of any one of claims 1 to 11, wherein the filler is talc.

13. The thermoplastic composition of any one of claims 1 to 12, where the impact modifier is ABS.

14. An article comprising the thermoplastic composition of any one of claims 1 to 13.

15. A method of preparing a thermoplastic composition, comprising melt blending:
55 to 97 weight percent of a polycarbonate;
1 to 20 weight percent of a polysiloxane-polycarbonate comprising siloxane units of the formula 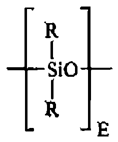 wherein each occurrence of R is the same or different, and is a C₁₋₃₀ monovalent organic group, wherein E is 1 to 1,000, and wherein the polysiloxane-polycarbonate comprises 0.1 weight percent to 15 weight percent siloxane units;
1 to 10 weight percent of an impact modifier; and
1 to 10 weight percent of a filler, wherein the filler has a particle size with a D₅₀ less than 2.7 micrometers.

## Patentansprüche

1. Eine thermoplastische Zusammensetzung, die folgendes umfasst:
55 bis 97 Gewichtsprozent eines Polycarbonats;
1 bis 20 Gewichtsprozent eines Polysiloxan-Polycarbonats umfassend Siloxaneinheiten mit der Formel: 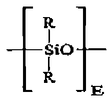 worin jedes Vorkommen von R gleich oder unterschiedlich ist und eine C₁₋₃₀ monovalente organische Gruppe ist, worin E 1 bis 1000 ist, und worin das Polysiloxan-Polycarbonat 0,1 Gewichtsprozent bis 15 Gewichtsprozent Siloxaneinheiten umfasst;
1 bis 10 Gewichtsprozent eines Schlagfestmodifikators; und
1 bis 10 Gewichtsprozent eines Füllstoffs, der eine durchschnittliche Partikelgröße D₅₀ von weniger als 2,7 Mikrometer hat.

2. Die thermoplastische Zusammensetzung gemäß Anspruch 1, worin eine Probe hergestellt aus der thermoplastischen Zusammensetzung und mit einer Dicke von weniger als 3 Millimetern die UL 94 Brennbarkeits-5VB-Prüfung besteht.

3. Die thermoplastische Zusammensetzung gemäß Ansprüchen 1 oder 2, worin eine Probe hergestellt aus der thermoplastischen Zusammensetzung und mit einer Dicke von 3 Millimetern die UL 94 Brennbarkeits-V0-Prüfung besteht.

4. Die thermoplastische Zusammensetzung gemäß irgendeinem der Ansprüche 1 bis 3, worin eine Probe geformt aus der thermoplastischen Zusammensetzung keine sichtbaren Defekte aufweist, wenn sie mit einer Distanz von 0,1 bis 1 Meter betrachtet wird.

5. Die thermoplastische Zusammensetzung gemäß irgendeinem der Ansprüche 1 bis 4, worin eine Probe umfassend die thermoplastische Zusammensetzung einen Biegemodul von größer als 25000 Kilogramm pro Quadratzentimeter hat, wenn gemessen in Übereinstimmung mit ASTM D790.

6. Die thermoplastische Zusammensetzung gemäß irgendeinem der Ansprüche 1 bis 5, worin die Siloxaneinheiten folgende Formel haben 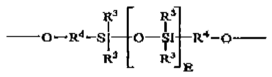 worin jedes R³ unabhängig ein C₁-C₁₂ Hydrocarbyl ist, E hat einen durchschnittlichen Wert von 1 bis 1000, und jedes Vorkommen von R⁴ ist unabhängig ein divalentes C₁-C₃₀ Hydrocarbylen.

7. Die thermoplastische Zusammensetzung gemäß irgendeinem der Ansprüche 1 bis 6, worin die Siloxaneinheiten folgende Formel haben 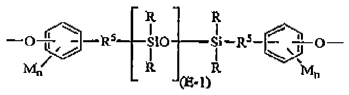 worin jedes R unabhängig ein C₁-C₁₂ Hydrocarbyl ist, E hat einen durchschnittlichen Wert von 1 bis 1000, jedes R⁵ ist unabhängig eine divalente C₂-C₈ aliphatische Gruppe, jedes M kann gleich oder unterschiedlich sein und kann ein Halogen, Cyano, Nitro, eine C₁-C₆ Alkylthio, C₁-C₈ Alkyl, C₁-C₈ Alkoxy, C₂-C₈ Alkenyl, C₂-C₈ Alkenyloxygruppe, C₃-C₈ Cycloalkyl, C₃-C₈ Cyaloalkoxy, C₆-C₁₀ Aryl, C₆-C₁₀ Aryloxy, C₇-C₁₂ Arylalkyl, C₇-C₁₂ Arylalkoxy, C_{'})-Cᵢ₂ Alkylaryl, oder C₇-C₁₂ Alkylaryloxy sein, und jedes N ist unabhängig 0, 1, 2, 3 oder 4.

8. Die thermoplastische Zusammensetzung gemäß irgendeinem der Ansprüche 1 bis 7, weiter umfassend ein flammenhemmendes Mittel, worin das flammenhemmende Mittel eine Phosphor-enthaltende Verbindung umfasst.

9. Die thermoplastische Zusammensetzung gemäß irgendeinem der Ansprüche 1 bis 8, weiter ein Antitropfmittel umfassend, worin das Antitropfmittel in einer Menge von 0,1 bis 1,5 Gewichtsteilen vorhanden ist, basierend auf dem Gewicht des Polycarbonats, des Polysiloxan-Polycarbonats, des Füllstoffs und des Schlagfestmodifikators.

10. Die thermoplastische Zusammensetzung gemäß irgendeinem der Ansprüche 1 bis 9, worin der Siloxangehalt der thermoplastischen Zusammensetzung geringer ist als oder gleich 2 Gewichtsprozent, basierend auf dem Gesamtgewicht der Zusammensetzung.

11. Die thermoplastische Zusammensetzung gemäß irgendeinem der Ansprüche 1 bis 10, worin der Füllstoff ein mineralischer Füllstoff ist.

12. Die thermoplastische Zusammensetzung gemäß irgendeinem der Ansprüche 1 bis 11, worin der Füllstoff Talkum ist.

13. Die thermoplastische Zusammensetzung gemäß irgenddeinem der Ansprüche 1 bis 12, worin der Schlagfestmodifikator ABS ist.

14. Ein Artikel umfassend die thermoplastische Zusammensetzung gemäß irgendeinem der Ansprüche 1 bis 13.

15. Ein Verfahren zur Herstellung einer thermoplastischen Zusammensetzung, umfassend das Schmelzmischen von:
55 bis 97 Gewichtsprozent eines Polycarbonats;
1 bis 20 Gewichtsprozent eines Polysiloxan-Polycarbonats umfassend Siloxaneinheiten der Formel 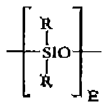 worin jedes Vorkommen von R gleich oder unterschiedlich ist und eine C₁₋₃₀ monovalente organische Gruppe ist, worin E 1 bis 1000 ist, und worin das Polysiloxan-Polycarbonat 0,1 Gewichtsprozent bis 15 Gewichtsprozent Siloxaneinheiten umfasst;
1 bis 10 Gewichtsprozent eines Schlagfest-Modifikators; und
1 bis 10 Gewichtsprozent eines Füllstoffs, worin der Füllstoff eine Partikelgröße mit einer D₅₀ von weniger als 2, 7 Mikrometer hat.

## Revendications

1. Composition thermoplastique comprenant:
55 à 97 pourcent en poids d'un polycarbonate;
1 à 20 pourcent en poids d'un polysiloxane-polycarbonate comprenant des unités de siloxane ayant comme formule 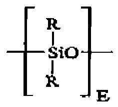 dans laquelle chaque présence de R est égale ou différente, et est un groupe organique monovalent EN C₁₋₃₀, dans laquelle E est 1 à 1.000, et dans laquelle le polysiloxane-polycarbonate comprend 0,1 pourcent en poids à 15 pourcent en poids d'unité de siloxane ;
1à 10 pourcent en poids d'un modificateur d'impact ; et
1 à 10 pourcent en poids d'une charge ayant une taille moyenne de particule D₅₀ inférieure à 2,7 micromètres.

2. Composition thermoplastique selon la revendication 1, dans laquelle un échantillon préparé à partir de la composition thermoplastique et ayant une épaisseur de moins de 3 millimètres passe le test 5VB de l'inflammabilité UL94.

3. Composition thermoplastique selon la revendication 1 ou 2, dans laquelle l'échantillon préparé à partir de la composition thermoplastique et ayant une épaisseur de 3 millimètres passe le test V0 de l'inflammabilité UL94.

4. Composition thermoplastique selon une quelconque des revendications 1 à 3, dans laquelle un échantillon moulé à partir de la composition thermoplastique n'a pas de défauts visibles lorsqu'on l'observe à une distance de 0,1 à 1 mètre.

5. Composition thermoplastique selon une quelconque des revendications 1 à 4, dans laquelle un échantillon comprenant la composition thermoplastique a un coefficient de flexion supérieur à 25.000 kilogrammes par centimètre carré lorsque on le mesure selon ASTM D790.

6. Composition thermoplastique selon une quelconque des revendications 1 à 5, dans laquelle les unités de siloxane ont la formule 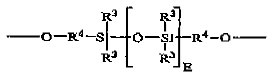 dans laquelle R³ est Indépendamment un C₁-C₁₂hydrocarbyle, E a une valeur moyenne de 1 à 1.000, et chaque présence de R⁴ est indépendamment un C₁-C₆₀ hydrocarbylène bivalent.

7. Composition thermoplastique selon une quelconque des revendications 1 à 6, dans laquelle les unités de siloxane ont la formule 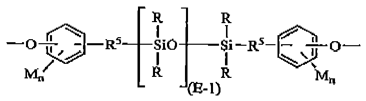 dans laquelle chaque R est indépendamment un C₁-C₁₂ hydrocarbyle, E a une valeur moyenne de 1 à 1000, chaque R5 est indépendamment un groupe C₂-C₈ aliphatique bivalent, chaque M peut être égale ou différent, et peut être un halogène, cyano, nitro, C₁-C₃ alkylthio, C₁-C₈ alkyl, C₁-C₈ alkoxy, C₂-C₈ alkenyl, un groupe C₂-C₈ alkenyloxy, C₃-C₈ cycloalkyl, C₃-C₈ cycloalkoxy, C₆-C₁₀ aryle, C₆-C₁₀ aryloxy, C₇-C₁₂ arylakyl, C₇-C₁₂ arylalkoxy, C₇-C₁₂ alkylaryl, ou C₇-C₁₂ alkylaryloxy, et chaque n est indépendamment 0, 1, 2, 3, ou 4.

8. Composition thermoplastique selon une quelconque des revendications 1 à 7, comprenant en outre un retardateur de flamme, dans laquelle le retardateur de flamme comprend un composé contenant du phosphore.

9. Composition thermoplastique selon une quelconque des revendications 1 à 8, comprenant en outre un agent anti-goutte, dans laquelle l'agent anti-goutte est présent dans une quantité de 0,1 à 1,5 parts en poids, sur la base du poids du polycarbonate, du polysiloxane-polycarbonate, de la charge, et du modificateur d'impact.

10. Composition thermoplastique selon une quelconque des revendications 1 à 9, dans laquelle le contenu de siloxane de la composition thermoplastique est de moins de ou égale à 2 pourcent en poids, sur la base du poids total de la composition.

11. Composition thermoplastique selon une quelconque des revendications 1 à 10, dans laquelle la charge est une charge minérale.

12. Composition thermoplastique selon une quelconque des revendications 1 à 11, dans laquelle la charge est du talc.

13. Composition thermoplastique selon une quelconque des revendications 1 à 12, dans laquelle le modificateur d'impact est ABS.

14. Article comprenant la composition thermoplastique selon une quelconque des revendications 1 à 13.

15. Méthode pour préparer une composition thermoplastique, comprenant de mélanger en fusion :
55 à 97 pourcent en poids de polycarbonate ;
1 à 20 pourcent en poids de polysiloxane-polycarbonate comprenant des unités de siloxane ayant formule 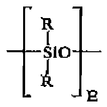 dans laquelle chaque présence de R est égale ou différente, et est un groupe organique monovalent en C₁₋₃₀, dans laquelle E est 1 à 1.000, et dans laquelle le polysiloxane-polycarbonate comprend 0,1 pourcent en poids à 15 pourcent en poids d'unités de siloxane ;
1 à 10 pourcent en poids d'un modificateur d'Impact ; et
1 à 10 pourcent en poids d'une charge, dans laquelle la charge a une taille de particule avec un D₅₀ inférieur à 2,7 micromètres.
